(19) Europäisches Patentamt
European Patent Office
Office européen des brevets

(11) **EP 4 261 921 B1**

(12) **EUROPEAN PATENT SPECIFICATION**

(45) Date of publication and mention
of the grant of the patent:
**15.04.2026 Bulletin 2026/16**

(51) International Patent Classification (IPC):
*H01M 4/13* (2010.01)     *H01G 11/26* (2013.01)
*H01G 11/52* (2013.01)    *H01M 50/414* (2021.01)
*H01M 50/434* (2021.01)   *H01M 50/443* (2021.01)
*H01M 50/446* (2021.01)   *H01M 50/463* (2021.01)
*H01M 50/489* (2021.01)   *B32B 5/16* (2006.01)

(21) Application number: **21903229.9**

(22) Date of filing: **29.11.2021**

(52) Cooperative Patent Classification (CPC):
**H01G 11/52; B32B 5/16; B32B 7/12; H01M 50/414;
H01M 50/434; H01M 50/446; H01M 50/489;**
B32B 2264/102; B32B 2264/1023; B32B 2264/303;
B32B 2307/306; H01G 9/02; Y02E 60/10

(86) International application number:
**PCT/JP2021/043709**

(87) International publication number:
**WO 2022/124125 (16.06.2022 Gazette 2022/24)**

(54) **LAMINATE FOR ELECTROCHEMICAL ELEMENTS AND ELECTROCHEMICAL ELEMENT**

LAMINAT FÜR ELEKTROCHEMISCHE ELEMENTE UND ELEKTROCHEMISCHES ELEMENT

STRATIFIÉ POUR ÉLÉMENTS ÉLECTROCHIMIQUES ET ÉLÉMENT ÉLECTROCHIMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2020 JP 2020204571**

(43) Date of publication of application:
**18.10.2023 Bulletin 2023/42**

(73) Proprietor: **Zeon Corporation
Tokyo 100-8246 (JP)**

(72) Inventor: **OGIHARA, Tasuku
Tokyo 100-8246 (JP)**

(74) Representative: **Maiwald GmbH
Elisenhof
Elisenstraße 3
80335 München (DE)**

(56) References cited:
WO-A1-2020/175079    WO-A1-2020/246394
WO-A1-2021/161842    CN-A- 112 054 150
JP-A- 2017 103 030    JP-A- 2017 152 268
JP-A- 2017 185 647    JP-A- 2018 147 578
KR-A- 20200 082 480   US-A1- 2014 322 587

## Description

TECHNICAL FIELD

The present disclosure relates to a laminate for an electrochemical device and an electrochemical device.

BACKGROUND

Electrochemical devices such as lithium ion secondary batteries, electric double-layer capacitors, and lithium ion capacitors have characteristics such as compact size, light weight, high energy-density, and the ability to be repeatedly charged and discharged, and are used in a wide variety of applications. An electrochemical device normally includes device members such as a plurality of electrodes and a separator that isolates these electrodes from one another and prevents internal short-circuiting.

A laminate for an electrochemical device that has a layer (functional layer) for causing the display of a desired function such as heat resistance or adhesiveness stacked on a substrate may conventionally be used as a device member such as an electrode or a separator. For example, Patent Literature (PTL) 1 discloses a separator obtained by stacking a porous layer, which contains a resin and a filler and has a thickness of less than 8.0 μm and a surface roughness (Ra) of not more than 0.15 μm, on a polyolefin porous film as a substrate. According to PTL 1, the porous layer included in the separator has excellent ion permeability and peel strength. As another example, PTL 2 discloses a functional layer for a nonaqueous secondary battery comprising a porous film layer including non-conductive particles and an adhesive layer deposited on the porous film layer. The porous film layer has a surface roughness (Ra) of 0.1-5.0 μm and the adhesive layer includes organic particles having a volume-average particle diameter (Dp) of 0.2-5.0 μm. PTL 3, as yet another example, discloses a separator for a rechargeable lithium battery which includes a porous substrate and a coating layer disposed on at least one surface of the porous substrate. The coating layer includes a heat resistant binder including a (meth)acryl-based copolymer, polyethylene particles and first inorganic particles. The particle size of the first inorganic particles is greater than the particle size of the polyethylene particles.

CITATION LIST

Patent Literature

PTL 1: JP 2020-177773 A

PTL 2: JP 2017-103030 A

PTL 3: CN 112054150 A

SUMMARY

(Technical Problem)

A device member such as an electrode or a separator may be stored and transported in a wound state. During such storage and transportation, device members may adhere one another via the functional layer (i.e., blocking). That is, the laminate used as a device member is required to have the capability of inhibiting blocking via the functional layer (improving blocking resistance).

On the other hand, the functional layer included in the laminate is required to display excellent adhesiveness in production of electrochemical devices. Specifically, in a case in which a plurality of device members such as an electrode and a separator are stacked on one another, optionally wound up, and subsequently heat pressed to produce a cell, there has been a problem that shortening the heat pressing time with the aim of improving cell production efficiency makes it difficult for sufficient adhesiveness to be displayed by a functional layer in a laminate that is positioned in a central part of a cell where sufficient transmission of heat is difficult. That is, the laminate used as a device member is also required to display excellent adhesiveness under low temperature (excellent low-temperature adhesiveness), while ensuring the blocking resistance described above.

However, a conventional laminate such as described above could not display a good balance of blocking resistance and low-temperature adhesiveness when used as a device member.

It could be helpful to provide a laminate for an electrochemical device that can advantageously be used as a device member having excellent blocking resistance and low-temperature adhesiveness, and also to provide an electrochemical device that includes this laminate for an electrochemical device as a device member.

(Solution to Problem)

The inventor made extensive studies to achieve the foregoing object. The inventor discovered that, in production of a laminate, a laminate obtained by forming a functional layer on a substrate using heat-resistant fine particles (fine particles that may display heat resistance); adhesive particles (particles that may display adhesiveness) containing a polyester polymer having a glass-transition temperature within a predetermined range; and a binder and causing the functional layer to have prescribed properties can be used as a device member having both excellent blocking resistance and excellent low-temperature adhesiveness. In this manner, the inventor completed the present disclosure.

The present disclosure aims to advantageously solve the problem set forth above, and a presently disclosed laminate for an electrochemical device comprises a substrate; and a functional layer arranged on the substrate, wherein the functional layer contains heat-resistant fine particles; adhesive particles containing an adhesive polymer; and a binder, the adhesive polymer contains a polyester polymer having a glass-transition temperature in a range of not lower than 10°C and not higher than 95°C, the functional layer includes an adhesion region formed of the adhesive particles and a heat-resistant region formed of the heat-resistant fine particles and the binder in plan view from a side corresponding to the functional layer, and the adhesive particles have a volume-average particle diameter that is larger than an average stacking direction height of the heat-resistant region. The laminate set forth above can advantageously be used as a device member having excellent blocking resistance and low-temperature adhesiveness.

Note that the "glass-transition temperature" in the present disclosure can be measured using a method described in the EXAMPLES section.

Moreover, the "volume-average particle diameter" of adhesive particles that are referred to in the present disclosure can be measured using a method described in the EXAMPLES section.

Furthermore, the "average stacking direction height" of a heat-resistant region that is referred to in the present disclosure can be measured using a method described in the EXAMPLES section.

In the presently disclosed laminate for an electrochemical device, the adhesive particles preferably further contain a fusible additive having a melting point in a range of not lower than 40°C and not higher than 95°C. When the adhesive particles contain a fusible additive having a melting point within the range set forth above, low-temperature adhesiveness of a device member formed of the laminate can be further improved.

Note that the "melting point" of a fusible additive referred to in the present disclosure can be determined by using a differential scanning calorimeter (DSC) to perform measurement under conditions of heating at 100°C/min and taking a maximum value of the obtained DSC curve.

In the presently disclosed laminate for an electrochemical device, the fusible additive is preferably at least one selected from the group consisting of an ester wax; a paraffin wax; and a crystalline polyester resin having no glass-transition temperature in a range of not lower than 10°C and not higher than 95°C. By using at least any one of the fusible additives as described above, it is possible to further improve low-temperature adhesiveness of a device member formed of the laminate.

Note that the "crystalline polyester resin" in the present disclosure has no glass-transition temperature in the range of not lower than 10°C and not higher than 95°C and is thus a component different from the "polyester polymer" having a glass-transition temperature in the range of not lower than 10°C and not higher than 95°C.

In the presently disclosed laminate for an electrochemical device, the volume-average particle diameter of the adhesive particles is preferably not less than 1.0 $\mu$m and not more than 10.0 $\mu$m. When the volume-average particle diameter of the adhesive particles is within the range set forth above, heat resistance of a device member formed of the laminate can be increased while also further improving blocking resistance and low-temperature adhesiveness of the device member.

In the presently disclosed laminate for an electrochemical device, a ratio of the volume-average particle diameter of the adhesive particles relative to the average stacking direction height of the heat-resistant region is preferably not less than 1.1 and not more than 10.0. When the ratio (volume-average particle diameter of adhesive particles/average stacking direction height of heat-resistant region) of the volume-average particle diameter of the adhesive particles relative to the average stacking direction height of the heat-resistant region is within the range set forth above, heat resistance of a device member formed of the laminate can be increased while also further improving blocking resistance and low-temperature adhesiveness of the device member.

In the presently disclosed laminate for an electrochemical device, a volume ratio of content of the heat-resistant fine particles relative to content of the adhesive particles in the functional layer is preferably not less than 55/45 and not more than 95/5. When the volume ratio of content of the heat-resistant fine particles relative to content of the adhesive particles in the functional layer is within the range set forth above, heat resistance of a device member formed of the laminate can be increased while also further improving low-temperature adhesiveness of the device member.

In the presently disclosed laminate for an electrochemical device, the adhesive particles preferably have an average circularity of not less than 0.90 and not more than 0.99. When the average circularity of the adhesive particles is within the range set forth above, low-temperature adhesiveness of a device member formed of the laminate can be further increased while also improving device characteristics (rate characteristics and cycle characteristics) of an electrochemical device including this device member.

Note that the "average circularity" of adhesive particles referred to in the present disclosure can be measured using a method described in the EXAMPLES section.

In the presently disclosed laminate for an electrochemical device, the heat-resistant fine particle are preferably inorganic fine particles. By using inorganic fine particles as the heat-resistant fine particles, it is possible to improve heat resistance of a device member formed of the laminate.

In the presently disclosed laminate for an electrochemical device, the inorganic fine particles preferably contain at least one selected from the group consisting of alumina particles, boehmite particles, barium sulfate particles, and magnesium hydroxide particles. By using at least any one of the inorganic fine particles as described above, it is possible to further improve heat resistance of a device member formed of the laminate.

Moreover, the present disclosure aims to advantageously solve the problem set forth above, and a presently disclosed electrochemical device comprises any one of the laminates for an electrochemical device set forth above. The electrochemical device comprising any one of the laminates set forth above as a device member has excellent device characteristics such as rate characteristics and cycle characteristics.

(Advantageous Effect)

According to the present disclosure, it is possible to provide a laminate for an electrochemical device that can advantageously be used as a device member having excellent blocking resistance and low-temperature adhesiveness, and also to provide an electrochemical device including this laminate for an electrochemical device as a device member.

BRIEF DESCRIPTION OF THE DRAWINGS

In the accompanying drawings:

FIG. 1 is a plan view schematically illustrating one example of a laminate for an electrochemical device according to the present disclosure in plan view from a side corresponding to a functional layer; and
FIG. 2 is a cross-sectional view schematically illustrating one example of a stacking direction cross-section of a laminate for an electrochemical device according to the present disclosure.

DETAILED DESCRIPTION

The following provides a detailed description of embodiments of the present disclosure.

The presently disclosed laminate for an electrochemical device can be used as a device member such as a separator or an electrode (positive electrode or negative electrode). Moreover, the presently disclosed electrochemical device includes the presently disclosed laminate for an electrochemical device as a device member.

(Laminate for electrochemical device)

The presently disclosed laminate includes a substrate and a functional layer formed on the substrate. The functional layer on the substrate includes at least an adhesion region formed of adhesive particles and a heat-resistant region formed of heat-resistant fine particles and a binder in plan view of the laminate from a side corresponding to the functional layer. A feature thereof is that the volume-average particle diameter of the adhesive particles forming the adhesion region is larger than the average stacking direction height of the heat-resistant region.

The presently disclosed laminate having the configuration set forth above can adhere well to an adherend via the functional layer, which is presumed to be due to there being a large number of sites where the adhesive particles of the adhesion region protrude beyond the heat-resistant region in the functional layer.

In addition, low-temperature adhesiveness of a device member formed of the laminate improves, which is presumed to be due to a polyester polymer originating from adhesive particles that have been melted by heat pressing infiltrating into a matrix of the heat-resistant region formed such that the heat-resistant fine particles are bound to one another by the binder and thereby serving as an anchor (obtaining an anchor effect). On the other hand, it is presumed that due to the heat-resistant region suppressing excessive spreading in a direction parallel to a spreading direction of the substrate surface of a polyester polymer originating from adhesive particles that have been melted by heat pressing and thereby ensuring a path for the passage of charge carriers such as lithium ions, there is improvement of device characteristics such as rate characteristics and cycle characteristics.

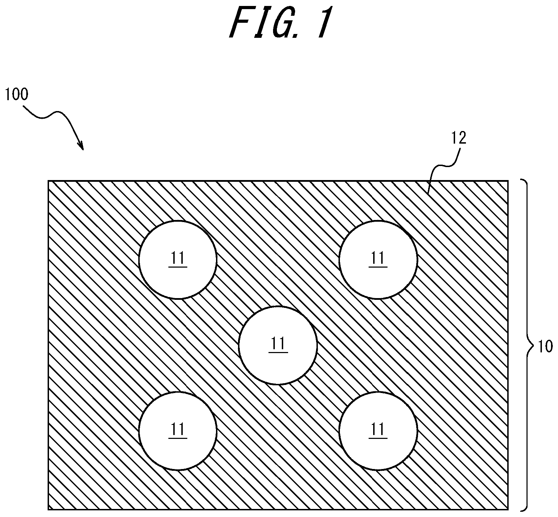

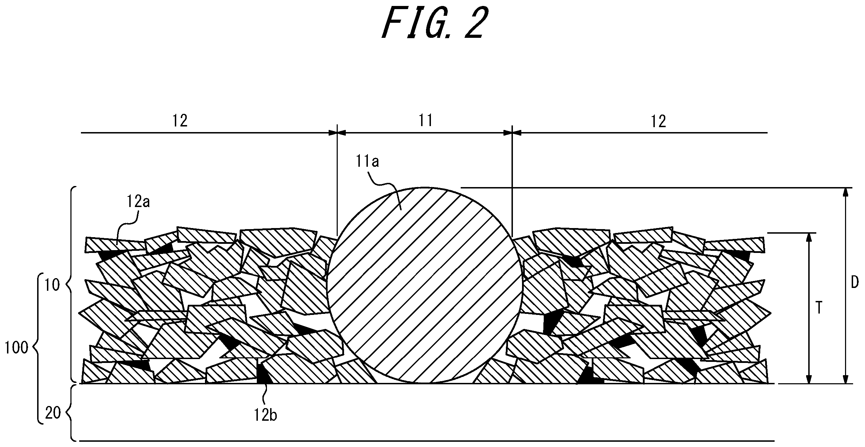

One example of the presently disclosed laminate is further described using FIG. 1 and FIG. 2.

FIG. 1 is a plan view schematically illustrating one example of when a laminate 100 for an electrochemical device according to the present disclosure is viewed in plan view from a side corresponding to a functional layer. In FIG. 1, a heat-resistant region 12 and a plurality of adhesion regions 11 surrounded by the heat-resistant region 12 are present at the surface of a functional layer 10 included in the laminate 100 for an electrochemical device.

FIG. 2 is a cross-sectional view schematically illustrating one example of a stacking direction cross-section of the laminate 100 for an electrochemical device according to the present disclosure. In FIG. 2, the laminate 100 for an electrochemical device has the functional layer 10 stacked on a substrate 20, and the functional layer 10 includes an adhesion region 11 and a heat-resistant region 12. In FIG. 2, the adhesion region 11 is formed of an adhesive particle 11a. On the other hand, the heat-resistant region 12 is formed such that heat-resistant fine particles 12a are bound to one another by a binder 12b and these resistant fine particles 12a overlap with one another in the stacking direction (thickness direction). In FIG. 2, the particle diameter (stacking direction height from the surface of the substrate20) D of the adhesive particle 11a is larger than the stacking direction height T of the heat-resistant region 12. It is thought that as a result of the volume-average particle diameter of adhesive particles being larger than the average stacking direction height of the heat-resistant region in the presently disclosed laminate, there are a large number of sites where an adhesive particle protrudes as illustrated in FIG. 2.

It should be noted that the presently disclosed laminate is not limited to the example illustrated in FIG. 1 and FIG. 2. For example, the presently disclosed laminate may include functional layers at both sides of the substrate. In a case in which the presently disclosed laminate includes functional layers at both sides of the substrate, at least one of these functional layers is a functional layer satisfying the prescribed properties. Moreover, although an adhesion region in the functional layer of the presently disclosed laminate may be formed of one adhesive particle as illustrated in FIG. 2, alternatively, a plurality of adhesive particles may assemble and form an adhesion region. Furthermore, although an adhesion region in the functional layer of the presently disclosed laminate may be formed of only an adhesive particle as illustrated in FIG. 2, alternatively, an adhesion region may be formed of an adhesive particle and at least one selected from the group consisting of a binder and another component as subsequently described. Also, although a heat-resistant region in the functional layer of the presently disclosed laminate may be formed of only heat-resistant fine particles and a binder as illustrated in FIG. 2, alternatively, a heat-resistant region may be formed of heat-resistant fine particles, a binder, and another component as subsequently described.

<Volume-average particle diameter of adhesive particles>

The volume-average particle diameter of the adhesive particles is not specifically limited so long as it is larger than the average stacking direction height of the heat-resistant region, but is preferably 1.0 $\mu$m or more, more preferably 2.5 $\mu$m or more, and even more preferably 5.0 $\mu$m or more, and is preferably 10.0 $\mu$m or less, more preferably 9.0 $\mu$m or less, and even more preferably 8.0 $\mu$m or less.

When the volume-average particle diameter of the adhesive particles is 1.0 $\mu$m or more, low-temperature adhesiveness of a device member formed of the laminate can be further improved, which is presumed to be due to the adhesive particles of the adhesion region further protruding beyond the heat-resistant region. A larger volume-average particle diameter for the adhesive particles can also improve heat resistance of a device member formed of the laminate, which is presumed to be due to the heat-resistant fine particles in the heat-resistant region adjacent to the adhesion region being able to assemble more densely. Moreover, blocking resistance of a device member formed of the laminate can be further improved.

On the other hand, when the volume-average particle diameter of the adhesive particles is 10.0 $\mu$m or less, low-temperature adhesiveness of a device member can be further improved, which is presumed to be due to the number of adhesive particles (number of particles) per unit volume of the functional layer increasing and thereby increasing the number of adhesion points when a device member including the functional layer is adhered to an adherend. Moreover, detachment of the adhesive particles can be inhibited, and a functional layer having adhesion regions formed of adhesive particles present all over the functional layer can be formed on the substrate.

Note that the volume-average particle diameter of the adhesive particles can be adjusted, for example, by altering the production conditions of the adhesive particles.

<Average stacking direction height of heat-resistant region>

The average stacking direction height of the heat-resistant region is not specifically limited so long as it is smaller than the volume-average particle diameter of the adhesive particles, but is preferably 0.5 $\mu$m or more, more preferably 0.8 $\mu$m or more, and even more preferably 1.0 $\mu$m or more, and is preferably less than 6.0 $\mu$m, preferably less than 5.0 $\mu$m, more preferably less than 4.0 $\mu$m, and even more preferably less than 2.5 $\mu$m. Heat resistance of a device member including the functional layer can be sufficiently ensured when the average stacking direction height of the heat-resistant region is 0.5 $\mu$m or more, whereas ion diffusivity of the functional layer can be ensured and rate characteristics and cycle characteristics of an electrochemical device can be improved when the average stacking direction height of the heat-resistant region is less than 6.0 $\mu$m.

Note that the average stacking direction height of the heat-resistant region can be adjusted, for example, by altering the formation conditions of the functional layer (proportional content of heat-resistant fine particles and/or a binder in a composition for a functional layer used to form the functional layer and thickness of a coating film obtained by supplying the composition for a functional layer onto the substrate).

<Volume-average particle diameter of adhesive particles/average stacking direction height of heat-resistant region>

A ratio (volume-average particle diameter of adhesive particles/average stacking direction height of heat-resistant region) of the volume-average particle diameter of the adhesive particles relative to the average stacking direction height of the heat-resistant region is preferably 1.1 or more, more preferably 1.2 or more, and even more preferably 1.6 or more, and is preferably 10.0 or less, more preferably 5.0 or less, and even more preferably 3.5 or less. When the value of this ratio is 1.1 or more, low-temperature adhesiveness of a device member formed of the laminate can be further improved, which is presumed to be due to the adhesive particles of the adhesion region sufficiently protruding beyond the heat-resistant region. On the other hand, when the value of this ratio is 10.0 or less, low-temperature adhesiveness of a device member formed of the laminate can be further improved, which is presumed to be due to the number of adhesive particles (number of particles) per unit volume of the functional layer increasing and thereby increasing the number of adhesion points when a device member including the functional layer is adhered to an adherend.

<Functional layer>

The functional layer included in the presently disclosed laminate having the structure set forth above contains heat-resistant fine particles, adhesive particles, and a binder. Note that the functional layer may contain components (other components) besides the heat-resistant fine particles, the adhesive particles, and the binder.

<<Heat-resistant fine particles>>

The heat-resistant fine particles contained in the functional layer are not specifically limited and may be fine particles formed of an inorganic material (i.e., inorganic fine particles) or fine particles formed of an organic material (i.e., organic fine particles) that are electrochemically stable and are stably present in the environment of use of an electrochemical device.

Note that just inorganic fine particles or just organic fine particles may be used individually as the heat-resistant fine particles, or inorganic fine particles and organic fine particles may be used in combination as the heat-resistant fine particles.

[Inorganic fine particles]

The inorganic fine particles may be particles of an inorganic oxide such as aluminum oxide (alumina, $Al_2O_3$), hydrous aluminum oxide (boehmite, AlOOH), gibbsite ($Al(OH)_3$), silicon oxide, magnesium oxide (magnesia), magnesium hydroxide, calcium oxide, titanium oxide (titania), barium titanate ($BaTiO_3$), ZrO, or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; fine particles of clay such as talc or montmorillonite; or the like. These particles may be subjected to element substitution, surface treatment, solid solution treatment, or the like as necessary. Note that one type of inorganic fine particles may be used individually, or two or more types of inorganic fine particles may be used in combination.

[Organic fine particles]

The organic fine particles are fine particles formed of a polymer that does not display adhesiveness and that differs from adhesive particles containing an adhesive polymer such as a polyester polymer, and a binder.

Examples of the organic fine particles include particles of various cross-linked polymers such as cross-linked polymethyl methacrylate, cross-linked polystyrene, cross-linked polydivinylbenzene, cross-linked styrenedivinylbenzene copolymer, polystyrene, polyimide, polyamide, polyamideimide, melamine resin, phenolic resin, and benzoguanamine-formaldehyde condensate, particles of heat-resistant polymers such as polysulfone, polyacrylonitrile, polyaramid, polyacetal, and thermoplastic polyimide, and modified products and derivatives of any of the preceding examples. Note that one type of organic fine particles may be used individually, or two or more types of organic fine particles may be used in combination.

Note that the organic fine particles are formed of a polymer that does not display adhesiveness as previously described. Specifically, the glass-transition temperature of the polymer forming the organic fine particles is preferably 150°C or higher.

Of the examples of heat-resistant fine particles given above, inorganic fine particles, and organic fine particles formed of a polymer having a glass-transition temperature of 150°C or higher are preferable from a viewpoint of further improving heat resistance of a device member formed of the laminate, with inorganic fine particles being more preferable and with particles formed of alumina (alumina particles), particles formed of boehmite (boehmite particles), particles formed of barium sulfate (barium sulfate particles), and particles formed of magnesium hydroxide (magnesium hydroxide particles) being even more preferable.

[Properties of heat-resistant fine particles]

The volume-average particle diameter of the heat-resistant fine particles is preferably 0.1 $\mu$m or more, more preferably 0.2 $\mu$m or more, and even more preferably 0.3 $\mu$m or more, and is preferably 1.0 $\mu$m or less, more preferably 0.9 $\mu$m or less, and even more preferably 0.8 $\mu$m or less. When the volume-average particle diameter of the heat-resistant fine particles is 0.1 $\mu$m or more, reduction of ion conductivity of the functional layer due to excessively dense packing of the heat-resistant fine particles in the functional layer can be inhibited to cause an electrochemical device to display excellent device characteristics (particularly rate characteristics). On the other hand, when the volume-average particle diameter of the heat-resistant fine particles is 1.0 $\mu$m or less, a device member formed of the laminate including the functional layer can be caused to sufficiently display excellent heat resistance even when the functional layer is thin. Consequently, heat resistance of the device member can be sufficiently ensured while also increasing the capacity of an electrochemical device.

<<Adhesive particles>>

The adhesive particles are particles containing an adhesive polymer including at least a polyester polymer, and the particles may also contain components (optional components) besides the adhesive polymer. That is, the adhesive particles may be particle substantially consisting of only an adhesive polymer or particles formed of an adhesive polymer and optional components.

[Adhesive polymer]

The adhesive polymer includes at least a polyester polymer as described above and optionally includes adhesive polymers (other adhesive polymers) besides the polyester polymer.

[Polyester polymer]

The polyester polymer is a polymer obtained by subjecting an alcohol component and a carboxylic acid component to condensation polymerization. In other words, the polyester polymer is a condensation polymer having a repeating unit derived from an alcohol component (alcohol unit) and a repeating unit derived from a carboxylic acid component (carboxylic acid unit).

-Alcohol component-

A polyhydric alcohol can be used as an alcohol component. The polyhydric alcohol may be a dihydric alcohol or a trihydric or higher alcohol.

Examples of the dihydric alcohol include a chain aliphatic diol, a diol having an oxyalkylene group, and a diol having a carbocycle.

Examples of the chain aliphatic diol include ethylene glycol, 1,2-propylene glycol, 1,3-propylene glycol, 1,4-butanediol, 3-methyl-1,5-pentanediol, 1,6-hexanediol, 1,8-octanediol, 1,10-decanediol, and 1,12-dodecanediol.

Examples of the diol having an oxyalkylene group include diethylene glycol, triethylene glycol, dipropylene glycol, polyethylene glycol, polypropylene glycol, and polytetramethylene glycol.

Examples of the diol having a carbocycle include 1,4-cyclohexanedimethanol, and bisphenols (e.g., bisphenol A, bisphenol F, and bisphenol S), hydrogenated products of any of bisphenols, and alkylene oxide adducts of any of bisphenols (e.g., ethylene oxide adduct, propylene oxide adduct, and butylene oxide adduct).

Examples of the trihydric or higher alcohol include glycerin, trimethylolethane, trimethylolpropane, pentaerythritol, sorbitol, and dipentaerythritol.

One type of alcohol components may be used individually, or two or more types of alcohol components may be used in combination. As an alcohol component, a diol having a carbocycle is preferable, bisphenols, hydrogenated products of any of bisphenols, and alkylene oxide adducts of any of bisphenols are more preferable, the alkylene oxide adducts of any of bisphenols are even more preferable, alkylene oxide adducts of bisphenol A are particularly preferable, and ethylene oxide adducts of bisphenol A and propylene oxide adducts of bisphenol A are most preferable.

-Carboxylic acid component-

As a carboxylic acid component, polyvalent carboxylic acid and anhydrides thereof, and halides of polyvalent carboxylic acid and anhydrides thereof can be used.

Examples of the polyvalent carboxylic acid include chain aliphatic polyvalent carboxylic acids such as oxalic acid, malonic acid, succinic acid, adipic acid, sebacic acid, dodecanedioic acid, maleic acid, fumaric acid, itaconic acid, citraconic acid, and glutaconic acid; and aromatic polyvalent carboxylic acids such as phthalic acid, isophthalic acid, terephthalic acid, trimellitic acid, naphthalene dicarboxylic acid, and pyromellitic acid.

One type of carboxylic acid components may be used individually, or two or more types of carboxylic acid components may be used in combination. As a carboxylic acid component, terephthalic acid, isophthalic acid, fumaric acid, trimellitic acid, and anhydrides thereof are preferable.

-Condensation polymerization-

The method by which the alcohol component and carboxylic acid component set forth above are subjected to condensation polymerization is not specifically limited, and known polymerization aids and polymerization conditions can be adopted.

-Glass-transition temperature-

The glass-transition temperature of the polyester polymer is required to be not lower than 10°C and not higher than 95°C, preferably 15°C or higher, more preferably 30°C or higher, even more preferably 40°C or higher, and particularly preferably 56°C or higher, and is preferably 90°C or lower, and more preferably 80°C or lower. When the glass-transition temperature of the polyester polymer is lower than 10°C, blocking resistance of a device member formed of the laminate reduces. On the other hand, when the glass-transition temperature of the polyester polymer is higher than 95°C, low-temperature adhesiveness of a device member formed of the laminate reduces.

Note that the glass-transition temperature of the polyester polymer can be controlled by altering the type of the alcohol component and/or the carboxylic acid component used for producing the polyester polymer, and the polymerization conditions.

The melting point of the polyester polymer may be observed by the method set forth above, which is applied to a "fusible additive" such as a "crystalline polyester resin" described below (i.e., the polyester polymer may have crystallinity). However, even if the polyester polymer has a melting point, the melting point is preferably out of a range of not lower than 40°C and not higher than 95°C. In other words, the polyester polymer preferably has no melting point in the range of not lower than 40°C and not higher than 95°C.

[Other adhesive polymers]

As an adhesive polymer that is optionally included in the adhesive particles besides the polyester polymer set forth above, at least a polymer (aromatic vinyl-based polymer) including an aromatic monovinyl monomer unit is preferable. The aromatic vinyl-based polymer may also include monomer units (other monomer units) besides the aromatic monovinyl monomer unit.

-Aromatic monovinyl monomer unit-

The inclusion of a polymer including an aromatic monovinyl monomer unit in the adhesive polymer improves elasticity of the adhesive particles and makes it possible to increase strength of the functional layer.

Examples of aromatic monovinyl monomers that can form an aromatic monovinyl monomer unit include, but are not specifically limited to, styrene, $\alpha$-methylstyrene, styrene sulfonic acid, butoxystyrene, and vinylnaphthalene. One of these aromatic monovinyl monomers may be used individually, or two or more of these aromatic monovinyl monomers may be used in combination. Of these aromatic monovinyl monomers, styrene is preferable.

The proportional content of aromatic monovinyl monomer units in the aromatic vinyl-based polymer when all monomer units in the aromatic vinyl-based polymer is taken to be 100 mass% is preferably 30 mass% or more, and more preferably 60 mass% or more, and is preferably 90 mass% or less, and more preferably 85 mass% or less. When the proportional content of aromatic monovinyl monomer units is 30 mass% or more, elasticity of the adhesive particles can be sufficiently improved, and strength of the functional layer can be increased. Consequently, low-temperature adhesiveness of a device member formed of the laminate can be sufficiently improved. On the other hand, when the proportional content of aromatic monovinyl monomer units is 90 mass% or less, flexibility of the adhesive particles can be increased, and low-temperature adhesiveness of a device member formed of the laminate can be sufficiently improved. Moreover, when the proportional content of aromatic monovinyl monomer units is within any of the ranges set forth above, low-temperature adhesiveness of a device member formed of the laminate can be sufficiently improved while also causing an electrochemical device to display excellent device characteristics (rate characteristics and cycle characteristics) using this device member, which is presumed to be due to a good balance of elasticity and flexibility of the adhesive particles being ensured as described above.

Note that the "proportional content" of each "monomer unit" included in a polymer referred to in the present disclosure can be measured by a nuclear magnetic resonance (NMR) method such as $^1$H-NMR.

-Other monomer units-

Although no specific limitations are placed on other monomer units, a cross-linkable monomer unit and a (meth) acrylic acid ester monomer unit are preferable.

Note that in the present disclosure, "(meth)acryl" is used to indicate "acryl" and/or "methacryl".

A cross-linkable monomer that can form a cross-linkable monomer unit is a monomer that can form a cross-linked structure during or after polymerization through heating or irradiation with energy rays. The inclusion of a cross-linkable monomer unit in the aromatic vinyl-based polymer makes it possible to improve elasticity of the adhesive particles and to thereby sufficiently improve low-temperature adhesiveness of a device member formed of the laminate.

Examples of monomers that can form a cross-linkable monomer unit include polyfunctional monomers including at least two groups displaying polymerization reactivity. Examples of such polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and epoxy group-containing ethylenically unsaturated monomers such as allyl glycidyl ether and glycidyl methacrylate. One of these polyfunctional monomers may be used individually, or two or more of these polyfunctional monomers may be used in combination. Of these polyfunctional monomers, divinylbenzene is preferable.

The proportional content of cross-linkable monomer units in the aromatic vinyl-based polymer when the amount of all monomer units in the aromatic vinyl-based polymer is taken to be 100 mass% is preferably 0.01 mass% or more, and is preferably 2 mass% or less, more preferably 1.5 mass% or less, and even more preferably 1 mass% or less. When the proportional content of cross-linkable monomer units is within any of the ranges set forth above, the aromatic vinyl-based polymer contained in the adhesive particles can be sufficiently inhibited from eluting into electrolyte solution. Moreover, elasticity of the adhesive particles can be improved, and, as a result, low-temperature adhesiveness of a device member formed of the laminate can be sufficiently improved.

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate.

One of these (meth)acrylic acid ester monomers may be used individually, or two or more of these (meth)acrylic acid ester monomers may be used in combination. Of these (meth)acrylic acid ester monomers, n-butyl acrylate, 2-ethylhexyl acrylate, and methyl methacrylate are preferable, and n-butyl acrylate and 2-ethylhexyl acrylate are more preferable.

The proportional content of (meth)acrylic acid ester monomer units in the aromatic vinyl-based polymer when all monomer units in the aromatic vinyl-based polymer are taken to be 100 mass% is preferably 5 mass% or more, and more preferably 10 mass% or more, and is preferably 65 mass% or less, more preferably 60 mass% or less, and even more preferably 35 mass% or less. When the proportional content of (meth)acrylic acid ester monomer units is 5 mass% or more, excessive lowering of the glass-transition temperature of the aromatic vinyl-based polymer can be inhibited, and blocking resistance of a device member formed of the laminate can be sufficiently improved. On the other hand, when the proportional content of (meth)acrylic acid ester monomers units is 65 mass% or less, low-temperature adhesiveness of a device member formed of the laminate can be sufficiently improved.

No specific limitations are placed on other monomer units besides the cross-linkable monomer unit and the (meth)acrylic acid ester monomer unit described above, and examples thereof include monomer units that are subsequently described in the "Binder" section (excluding those corresponding to an aromatic monovinyl monomer unit, cross-linkable monomer unit, or (meth)acrylic acid ester monomer unit).

The proportional content of monomer units other than the aromatic monovinyl monomer unit, cross-linkable monomer unit, and (meth)acrylic acid ester monomer unit described above in the aromatic vinyl-based polymer when all monomer units in the aromatic vinyl-based polymer are taken to be 100 mass% is preferably not less than 0 mass% and not more than 10 mass%, more preferably not less than 0 mass% and not more than 7 mass%, and even more preferably not less than 0 mass% and not more than 5 mass% from a viewpoint of ensuring stability of a composition for a functional layer used to form the functional layer.

-Glass-transition temperature-

The glass-transition temperature of the other adhesive polymers such as the aromatic vinyl-based polymer described above is preferably 10°C or higher, more preferably 30°C or higher, and even more preferably 40°C or higher, and is preferably 90°C or lower, and more preferably 80°C or lower. Blocking resistance of a device member formed of the laminate can be further improved when the glass-transition temperature of the adhesive particles is 10°C or higher, whereas low-temperature adhesiveness of the device member can be further improved when the glass-transition temperature of the adhesive particles is 90°C or lower.

Note that the glass-transition temperature of the other adhesive polymers can be controlled by altering the type and/or the percentage of monomers used for producing this polymer, and the polymerization conditions.

In a case in which the adhesive polymer contained in the adhesive particles is formed of the polyester polymer and other adhesive polymers, these two or more (plurality of) polymers preferably form a particle having a heterophase structure that has been formed by physical or chemical bonding of two or more different polymers. Specific examples of the heterophase structure include a core-shell structure that is a spherical particle in which the center (core portion) and the outer shell (shell portion) are formed from different polymers; and a side-by-side structure in which two or more polymers are adjacent to each other. Note that in the present disclosure, the "core-shell structure" includes a structure in which the shell portion covers the entire outer surface of the core portion and a structure in which the shell portion partially covers the outer surface of the core portion.

In a case in which the adhesive polymer is formed of a polyester polymer and other adhesive polymers, it is preferable that the core portion is formed of the other adhesive polymers (e.g., the foregoing aromatic vinyl-based polymer) and the shell portion is formed of the polyester polymer.

[Optional components]

As optional components other than the adhesive polymer described above, a fusible additive having a melting point in a range of not lower than 40°C and not higher than 95°C is preferable. The inclusion of a fusible additive in the adhesive particles can further improve low-temperature adhesiveness of a device member formed of the laminate.

The melting point of the fusible additive is required to be not lower than 40°C and not higher than 95°C as described above, is preferably 42°C or higher, more preferably 45°C or higher, and even more preferably 50°C or higher, and is preferably 90°C or lower, more preferably 70°C or lower, and even more preferably 60°C or lower. Blocking resistance of a device member formed of the laminate is not excessively impaired when the melting point of the fusible additive is 40°C or higher, and low-temperature adhesiveness of a device member formed of the laminate can be sufficiently improved when the melting point of the fusible additive is 95°C or lower.

Examples of fusible additives having the melting point as described above include a wax (a plant wax, an animal wax, a petroleum wax, a synthetic wax, a modified product of any of these waxes, or the like) and a crystalline polyester resin. Note that one type of fusible additives may be used individually, or two or more types of fusible additives may be used in combination.

-Wax-

Examples of plant waxes include candelilla wax, carnauba wax, rice bran wax, Japan wax, and jojoba oil.

Examples of animal waxes include beeswax.

Examples of petroleum waxes include paraffin wax, microcrystalline wax, and petrolatum wax.

Synthetic waxes can be categorized as Fischer-Tropsch waxes, polyolefin waxes, ester waxes, and so forth.

Examples of polyolefin waxes include polyethylene wax, polypropylene wax, and polybutylene wax.

Either of a monohydric alcohol fatty acid ester and a polyhydric alcohol fatty acid ester may be used as an ester wax. Specific examples of monohydric alcohol fatty acid esters that may be used include behenyl stearate. Specific examples of polyhydric alcohol fatty acid esters that may be used include pentaerythritol esters such as pentaerythritol tetramyristate, pentaerythritol tetrapalmitate, pentaerythritol tetrastearate, pentaerythritol tetralaurate, and pentaerythritol tetrabehenate; and dipentaerythritol esters such as dipentaerythritol hexamyristate, dipentaerythritol hexapalmitate, and dipentaerythritol hexalaurate.

-Crystalline polyester resin-

No specific limitations are placed on the crystalline polyester resin as long as it has a melting point in the range of not lower than 40°C and not higher than 95°C and has no glass-transition temperature in the range of not lower than 10°C and not higher than 95°C (in other words, as long as it has no glass-transition temperature itself, or has a glass-transition temperature in a range of lower than 10°C and/or higher than 95°C), and a polymer obtained by subjecting the alcohol component and the carboxylic acid component to condensation polymerization can be used as a crystalline polyester resin.

Any of the alcohol component and the carboxylic acid component used for producing the crystalline polyester resin may be the same as described in the "Polyester polymer" section. As an alcohol component, a chain aliphatic diol is preferable, and 1,6-hexanediol is more preferable. As a carboxylic acid component, chain aliphatic polyvalent carboxylic acid is preferable, and sebacic acid is more preferable.

Note that the method by which the alcohol component and carboxylic acid component set forth above are subjected to condensation polymerization is not specifically limited, and known polymerization aids and polymerization conditions can be adopted.

Of the examples of fusible additives given above, an ester wax, a paraffin wax, and a crystalline polyester resin are preferable from a viewpoint of further improving low-temperature adhesiveness of a device member formed of the laminate, with the ester wax and the crystalline polyester resin being more preferable and with the ester wax being even more preferable.

-Content of fusible additive-

The content of the fusible additive in the adhesive particles is preferably 1 part by mass or more, more preferably 2 parts by mass or more, even more preferably 5 parts by mass or more, further preferably 6 parts by mass or more, and particularly preferably 10 parts by mass or more, and is preferably 30 parts by mass or less, more preferably 25 parts by mass or less, even more preferably 20 parts by mass or less, and particularly preferably 15 parts by mass or less per 100 parts by mass of the adhesive polymer. When the content of the fusible additive in the adhesive particles is 1 part by mass or more per 100 parts by mass of the adhesive polymer, low-temperature adhesiveness of a device member formed of the laminate can be further improved. On the other hand, when the content of the fusible additive in the adhesive particles is 30 parts by mass or less per 100 parts by mass of the adhesive polymer, bleed-out of the fusible additive can be sufficiently inhibited, and blocking resistance of a device member formed of the laminate can be further increased while also improving rate characteristics and cycle characteristics of an electrochemical device including this device member.

The content of the fusible additive in the functional layer is preferably 1 part by mass or more, more preferably 2 parts by mass or more, even more preferably 5 parts by mass or more, further preferably 6 parts by mass or more, and particularly preferably 10 parts by mass or more per 100 parts by mass of the adhesive polymer, and is preferably 30 parts by mass or less, more preferably 25 parts by mass or less, even more preferably 20 parts by mass or less, and particularly preferably 15 parts by mass or less per 100 parts by mass of the adhesive polymer. When the content of the fusible additive in the functional layer is 1 part by mass or more per 100 parts by mass of the adhesive polymer, low-temperature adhesiveness of a device member formed of the laminate can be further improved. On the other hand, when the content of the fusible additive in the functional layer is 30 parts by mass or less per 100 parts by mass of the adhesive polymer, bleed-out of the fusible additive can be sufficiently inhibited, and blocking resistance of a device member formed of the laminate can be further increased while also improving rate characteristics and cycle characteristics of an electrochemical device including this device member.

[Average circularity]

The average circularity of the adhesive particles is preferably 0.90 or more, more preferably 0.92 or more, even more preferably 0.95 or more, and particularly preferably 0.97 or more, and is particularly preferably 0.99 or less. When the average circularity of the adhesive particles is 0.90 or more, low-temperature adhesiveness of a device member formed of the laminate can be further improved. In addition, adhesiveness of a device member formed of the laminate can be well displayed even in an electrolyte solution. On the other hand, when the average circularity of the adhesive particles is 0.99 or less, resistance in the electrolyte solution of a device member formed of the laminate can be reduced, and rate characteristics and cycle characteristics of an electrochemical device including this device member can be improved.

Note that the average circularity of the adhesive particles can be adjusted by altering the production method of the adhesive particles.

[Production of adhesive particles]

The production method of the adhesive particles containing an adhesive polymer is not specifically limited as long as the adhesive polymer containing a polyester polymer, and optional components such as a fusible additive used as necessary (referred to collectively as "adhesive particle material") can be made into particles, and can include, for example, (1) to (4) below:

(1) a method in which an adhesive particle material is dissolved and/or dispersed in an organic solvent in which at least a polyester polymer can dissolve to produce a liquid composition, this liquid composition is dispersed in an aqueous medium, and the organic solvent is then removed to make the adhesive particle material into particles (dissolution and suspension method);
(2) a method in which an adhesive particle material is dispersed in an aqueous medium using a surfactant and/or a dispersion stabilizer, and the dispersed fine particles are aggregated to make the adhesive particle material into particles (emulsification and aggregation method);
(3) a method in which an adhesive particle material is melted, kneaded, and then cooled, and the obtained kneaded product is subsequently pulverized to make the adhesive particle material into particles (pulverization method); and
(4) a method in which a monomer used for producing other adhesive polymers is subjected to suspension polymerization to make the adhesive particle material into particles, in the presence of a polyester polymer and optional components used as necessary (suspension polymerization method).

Of the methods of making the adhesive particle material into particles as described above, from a viewpoint of being able to easily adjusting the volume-average particle diameter and the average circularity of the adhesive particles, the dissolution and suspension method, the emulsification and aggregation method, and the suspension polymerization method are preferable, and the dissolution and suspension method and the suspension polymerization method are more preferable.

Note that the dissolution and suspension method, the emulsification and aggregation method, the pulverization method, and the suspension polymerization method can be each performed by adopting known methods and conditions.

[Content ratio of heat-resistant fine particles and adhesive particles]

Although no specific limitations are placed on the content ratio of the heat-resistant fine particles and the adhesive particles in the functional layer, the value of a volume ratio (heat-resistant fine particles/adhesive particles) of the content of the heat-resistant fine particles relative to the content of the adhesive particles is preferably 55/45 or more, and more preferably 60/40 or more, and is preferably 95/5 or less, more preferably 80/20 or less, and even more preferably 75/25 or less. Heat resistance of a device member formed of the laminate can be improved when the value of heat-resistant fine particles/adhesive particles (by volume) is 55/45 or more, whereas low-temperature adhesiveness of the device member can be further improved when this value is 95/5 or less.

Moreover, the value of a mass ratio (heat-resistant fine particles/adhesive particles) of the content of the heat-resistant fine particles relative to the content of the adhesive particles is preferably 49/51 or more, more preferably 58/42 or more, and even more preferably 64/36 or more, and is preferably 99/1 or less, more preferably 94/6 or less, and even more preferably 91/9 or less. Heat resistance of a device member formed of the laminate including the functional layer can be improved when the value of heat-resistant fine particles/adhesive particles (by mass) is 49/51 or more, whereas low-temperature adhesiveness of the device member can be further improved when this value is 99/1 or less.

<<Binder>>

The binder binds the heat-resistant fine particles one another in the heat-resistant region as described above. The binder may be a known polymer used as a binder, examples of which include a conjugated diene polymer, an acrylic polymer, polyvinylidene fluoride (PVDF), and polyvinyl alcohol (PVOH). One binder may be used individually, or two or more binders may be used in combination. Moreover, the binder is preferably a polymer that is water-insoluble and can be dispersed in a dispersion medium such as water, such as a conjugated diene polymer, an acrylic polymer, or polyvinylidene fluoride (PVDF), is more preferably a conjugated diene polymer or an acrylic polymer, and is even more preferably an acrylic polymer.

Note that when a polymer is referred to as "water-insoluble" in the present disclosure, this means that when 0.5 g of the polymer is dissolved in 100 g of water at a temperature of 25°C, insoluble content is 90 mass% or more.

[Conjugated diene polymer]

The term "conjugated diene polymer" refers to a polymer that includes a conjugated diene monomer unit derived from a conjugated diene monomer. Specific examples of conjugated diene polymers include, but are not specifically limited to, copolymers that include an aromatic monovinyl monomer unit and an aliphatic conjugated diene monomer unit, such as styrenebutadiene copolymer (SBR); butadiene rubber (BR); nitrile rubber (NBR) (copolymer including an acrylonitrile unit and a 1,3-butadiene unit); and hydrogenated products of any of these examples.

[Acrylic polymer]

The term "acrylic polymer" refers to a polymer that includes a (meth)acrylic acid ester monomer unit. In addition to a (meth)acrylic acid ester monomer unit, the acrylic polymer preferably includes either or both of a cross-linkable monomer unit and an acid group-containing monomer unit, for example.

Examples of (meth)acrylic acid ester monomers that can form a (meth)acrylic acid ester monomer unit include the same (meth)acrylic acid ester monomers as previously described in the "Adhesive particles" section. One of these (meth) acrylic acid ester monomers may be used individually, or two or more of these (meth)acrylic acid ester monomers may be used in combination. Of these (meth)acrylic acid ester monomers, n-butyl acrylate is preferable.

The proportional content of (meth)acrylic acid ester monomer units in the binder (acrylic polymer) when all monomer units in the binder are taken to be 100 mass% is preferably more than 65 mass%, more preferably 70 mass% or more, even more preferably 80 mass% or more, and particularly preferably 90 mass% or more, and is preferably 99 mass% or less, more preferably 98 mass% or less, and even more preferably 95 mass% or less.

Examples of cross-linkable monomers that can form a cross-linkable monomer unit include the same cross-linkable monomers as previously described in the "Adhesive particles" section. One of these cross-linkable monomers may be used individually, or two or more of these cross-linkable monomers may be used in combination. Of these cross-linkable monomers, allyl methacrylate and allyl glycidyl ether are preferable.

The proportional content of cross-linkable monomer units in the binder (acrylic polymer) when all monomer units in the binder are taken to be 100 mass% is preferably 0.1 mass% or more, and is preferably 3.0 mass% or less, and more preferably 2.5 mass% or less. Rate characteristics and cycle characteristics of an electrochemical device can be improved when the proportion constituted by cross-linkable monomer units is 0.1 mass% or more, whereas low-temperature adhesiveness of a device member formed of the laminate can be further improved when the proportion constituted by cross-linkable monomer units is 3.0 mass% or less.

Examples of acid group-containing monomers that can form an acid group-containing monomer unit include carboxy group-containing monomers, sulfo group-containing monomers, phosphate group-containing monomers, and hydroxy group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid-2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Note that one of these acid group-containing monomers may be used individually, or two or more of these acid group-containing monomers may be used in combination. Of these acid group-containing monomers, carboxy group-containing monomers are preferable, and methacrylic acid is more preferable.

The proportional content of acid group-containing monomer units in the binder (acrylic polymer) when all monomer units in the binder are taken to be 100 mass% is preferably 0.1 mass% or more, and is preferably 3.0 mass% or less, and more preferably 2.5 mass% or less.

Note that an acrylic polymer serving as the binder can include monomer units (other monomer units) other than the (meth)acrylic acid ester monomer unit, the cross-linkable monomer unit, and the acid group-containing monomer unit described above. Examples of other monomers that can form other monomer units that can be included in the acrylic polymer include aliphatic conjugated diene monomers such as 1,3-butadiene, 2-methyl-1,3-butadiene, 2,3-dimethyl-1,3-butadiene, and 2-chloro-1,3-butadiene; aromatic monovinyl monomers such as previously described in the "Adhesive particles" section; nitrile group-containing monomers such as acrylonitrile and methacrylonitrile; olefin monomers such as ethylene and propylene; halogen atom-containing monomers such as vinyl chloride and vinylidene chloride; vinyl ester monomers such as vinyl acetate, vinyl propionate, vinyl butyrate, and vinyl benzoate; vinyl ether monomers such as methyl vinyl ether, ethyl vinyl ether, and butyl vinyl ether; vinyl ketone monomers such as methyl vinyl ketone, ethyl vinyl ketone, butyl vinyl ketone, hexyl vinyl ketone, and isopropenyl vinyl ketone; and heterocycle-containing vinyl compound monomers such as N-vinylpyrrolidone, vinylpyridine, and vinylimidazole. Of these examples, acrylonitrile is preferable as another monomer.

Note that one of these other monomers may be used individually, or two or more of these other monomers may be used in combination in a freely selected ratio. The proportional content of other monomer units in the acrylic polymer may be adjusted as appropriate.

Although the binder can include an aromatic monovinyl monomer unit, the proportional content of aromatic monovinyl monomer units in the binder (particularly an acrylic polymer) when all monomer units in the binder are taken to be 100 mass% is preferably less than 30 mass%, more preferably 20 mass% or less, even more preferably 10 mass% or less, particularly preferably 5 mass% or less, and most preferably 0 mass% (i.e., an aromatic monovinyl monomer unit is not included).

[Properties of binder]

The glass-transition temperature of the binder is preferably -100°C or higher, more preferably -90°C or higher, and even more preferably -80°C or higher, and is preferably lower than 30°C, more preferably 20°C or lower, even more preferably 15°C or lower, and particularly preferably lower than 10°C. Binding capacity and strength of the binder can be increased when the glass-transition temperature of the binder is -100°C or higher, whereas flexibility of the functional layer containing the binder can be sufficiently ensured when the glass-transition temperature of the binder is lower than 30°C.

[Content of binder]

The content of the binder in the functional layer is preferably 0.1 parts by mass or more, more preferably 0.2 parts by mass or more, and even more preferably 0.5 parts by mass or more per 100 parts by mass of the heat-resistant fine particles, and is preferably 20 parts by mass or less, more preferably 15 parts by mass or less, even more preferably 10 parts by mass or less, and particularly preferably 6 parts by mass or less per 100 parts by mass of the heat-resistant fine particles. When the content of the binder in the functional layer is 0.1 parts by mass or more per 100 parts by mass of the heat-resistant fine particles, detachment from the functional layer of heat-resistant fine particles present in the heat-resistant region can be sufficiently inhibited while also further improving low-temperature adhesiveness of a device member including the functional layer. On the other hand, when the content of the binder in the functional layer is 20 parts by mass or less per 100 parts by mass of the heat-resistant fine particles, rate characteristics and cycle characteristics of an electrochemical device that includes a device member formed of the laminate can be improved.

[Production method of binder]

The binder can be produced through polymerization of a monomer composition containing the monomers described above, carried out in an aqueous solvent such as water, for example, but is not specifically limited to being produced in this manner. The proportion constituted by each monomer among all monomers in the monomer composition is normally the same as the proportion constituted by each monomer unit in the binder.

A known polymerization method and a known polymerization reaction can be adopted as the polymerization method and polymerization reaction without any specific limitations.

<<Other components>>

The functional layer included in the presently disclosed laminate can include a known component such as a dispersant and a thickener (e.g., sodium dodecylbenzenesulfonate, and a water-soluble polymer such as polyacrylic acid and a salt thereof and carboxymethyl cellulose and a salt thereof) that can be used for producing the functional layer, as a component other than the heat-resistant fine particles, the adhesive particles, and the binder described above, without any specific limitations. One of such other components may be used individually, or two or more of such other components may be used in combination.

Note that when a polymer is referred to as "water-soluble" in the present disclosure, this means that when 0.5 g of the polymer is dissolved in 100 g of water at a temperature of 25°C, insoluble content is less than 1.0 mass%.

<Substrate>

The substrate having the above-described functional layer on at least one side thereof may be selected as appropriate depending on the type of device member for which the presently disclosed laminate is to be used. For example, in a case in which the presently disclosed laminate is to be used as a separator, a separator substrate is used as the substrate. Moreover, in a case in which the presently disclosed laminate is to be used as an electrode, for example, an electrode substrate is used as the substrate.

<<Separator substrate>>

The separator substrate may be a known separator substrate such as an organic separator substrate without any specific limitations. The organic separator substrate is a porous member that is made from an organic material. The organic separator substrate may, for example, be a microporous membrane or non-woven fabric containing a polyolefin resin such as polyethylene, polypropylene, polybutene, or polyvinyl chloride, an aromatic polyamide resin, or the like.

Of these organic separator substrates, a microporous membrane formed of a polyolefin resin is preferable from a viewpoint of being possible to increase the ratio of electrode active material inside an electrochemical device and thereby increase the volumetric capacity of the electrochemical device.

Although the separator substrate may be of any thickness, the thickness thereof is preferably not less than 5 $\mu$m and not more than 30 $\mu$m, more preferably not less than 5 $\mu$m and not more than 20 $\mu$m, and even more preferably not less than 5 $\mu$m and not more than 18 $\mu$m.

<<Electrode substrate>>

The electrode substrate (positive electrode substrate or negative electrode substrate) is not specifically limited and may, for example, be an electrode substrate obtained by forming an electrode mixed material layer on a current collector.

The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector may be known examples thereof such as any of those described in JP2013-145763A, for example.

<Production method of laminate>

The method by which the presently disclosed laminate is produced is not specifically limited and may be a method in which the functional layer is formed on a release sheet and then the functional layer is transferred onto the substrate, for example. However, from a viewpoint of making transfer unnecessary and increasing production efficiency, it is preferable that the laminate is produced through a step (supply step) of supplying a composition for a functional layer containing at least the heat-resistant fine particles, the adhesive particles, the binder, and a dispersion medium onto the substrate and a step (drying step) of drying the composition for a functional layer that has been supplied onto the substrate.

<<Composition for functional layer>>

As described above, the composition for a functional layer contains at least the heat-resistant fine particles, the adhesive particles, and the binder in a dispersion medium, and optionally contains other components. Although no specific limitations are placed on the dispersion medium, water can preferably be used as the dispersion medium.

The method by which the composition for a functional layer is produced is also not specifically limited and may be known mixing method or dispersing method.

In a case in which the presently disclosed laminate is produced through a supply step and a drying step such as described above, the functional layer that is included in the laminate is formed of a dried product of the composition for a functional layer. Therefore, components contained in the functional layer are components that were contained in the composition for a functional layer, and the preferred ratio of these components in the composition for a functional layer is the same as the preferred ratio of the components in the functional layer described above.

<<Supply step>>

In the supply step, the composition for a functional layer described above is supplied onto the substrate so as to form a coating film of the composition for a functional layer on the substrate. The method by which the composition for a functional layer is supplied onto the substrate is not specifically limited and may be by applying the composition for a functional layer onto the surface of the substrate or by immersing the substrate in the composition for a functional layer. Application of the composition for a functional layer onto the surface of the substrate is preferable due to ease of controlling the thickness of the produced functional layer (particularly the average stacking direction height of the heat-resistant region).

Examples of methods by which the composition for a functional layer may be applied onto the surface of the substrate include, but are not specifically limited to, doctor blading, reverse roll coating, direct roll coating, gravure coating, bar coating, extrusion coating, and brush coating.

Note that a coating film of the composition for a functional layer may be formed at just one side of the substrate in the supply step or coating films of the composition for a functional layer may be formed at both sides of the substrate in the supply step.

<<Drying step>>

In the drying step, the coating film of the composition for a functional layer that has been formed on the substrate in the supply step is dried so as to remove the dispersion medium and form a functional layer.

Drying of the coating film of the composition for a functional layer may be performed by any commonly known method without any specific limitations. Examples of drying methods that can be used include drying by warm, hot, or low-humidity air; drying in a vacuum; and drying by irradiation with infrared light, electron beams, or the like. Although no specific limitations are placed on the drying conditions, the drying temperature is preferably 50°C to 150°C, and the drying time is preferably 1 minute to 30 minutes.

Note that in production of the presently disclosed laminate, the supply step and the drying step may be performed with respect to one side of the substrate to form a functional layer, and then the supply step and the drying step may be further performed with respect to the other side of the substrate to form a functional layer.

(Electrochemical device)

The presently disclosed electrochemical device includes an electrode and a separator and has the presently disclosed laminate set forth above as at least one of the electrode and the separator. The presently disclosed electrochemical device has excellent device characteristics such as rate characteristics and cycle characteristics as a result of the presently disclosed laminate set forth above being used as at least one device member among the electrode and the separator.

The presently disclosed electrochemical device may be a lithium ion secondary battery, an electric double-layer capacitor, or a lithium ion capacitor, for example, but is not specifically limited thereto, and is preferably a lithium ion secondary battery.

Although the following describes a case in which a lithium ion secondary battery is taken as one example of the presently disclosed electrochemical device and in which the presently disclosed laminate set forth above is used as a separator of the lithium ion secondary battery, the presently disclosed electrochemical device is not limited thereto.

<Positive electrode and negative electrode>

Electrodes that are each formed of a known electrode substrate (positive electrode substrate or negative electrode substrate) such as previously described in the "Substrate" section can be used as a positive electrode and a negative electrode.

<Electrolyte solution>

An organic electrolyte solution having a supporting electrolyte dissolved in an organic solvent is normally used as an electrolyte solution. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as $\gamma$-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant laminate as necessary to place the laminate in a battery container, injecting the electrolyte solution into the battery container, and sealing the battery container. Note that at least one device member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a repeating unit (monomer unit) formed through polymerization of a given monomer is normally, unless otherwise specified, the same as the ratio (charging ratio) of the given monomer among all monomers used in polymerization for forming the polymer.

In the examples and comparative examples, the following methods were used for evaluation of glass-transition temperature, volume-average particle diameter, average circularity, average stacking direction height of a heat-resistant region, ratio of volume-average particle diameter of adhesive particles relative to average stacking direction height of a heat-resistant region, ratio (volume ratio and mass ratio) of content of heat-resistant fine particles relative to content of adhesive particles, low-temperature adhesiveness, blocking resistance, and heat resistance of a separator including a functional layer, and rate characteristics and cycle characteristics of a lithium ion secondary battery.

<Glass-transition temperature (Tg) of polyester polymer and binder>

A polyester polymer and a binder were each used as a measurement sample. After measuring 10 mg of the measurement sample into an aluminum pan, measurement thereof by a differential scanning calorimeter (EXSTAR DSC6220 produced by SII NanoTechnology Inc.) was performed under conditions prescribed in JIS Z 8703 in a measurement temperature range of -100°C to 200°C and at a heating rate of 10°C/min with an empty aluminum pan as a reference so as to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Volume-average particle diameter of binder>

The volume-average particle diameter of a binder was measured by laser diffraction. Specifically, a produced water dispersion (adjusted to a solid content concentration of 0.1 mass%) of a binder was used as a sample. A particle diameter distribution (by volume) was measured using a laser diffraction particle size analyzer (LS-230 produced by Beckman Coulter, Inc.), and the particle diameter D50 at which cumulative volume calculated from a small diameter end of the distribution reached 50% was taken to be the volume-average particle diameter.

<Volume-average particle diameter of heat-resistant fine particles>

In a particle diameter distribution (by volume) measured by laser diffraction, the particle diameter (D50) at which cumulative volume calculated from a small diameter end of the distribution reached 50% was taken to be the volume-average particle diameter of heat-resistant fine particles.

<Volume-average particle diameter of adhesive particles>

After measuring 0.1 g in terms of adhesive particles into a beaker, 0.1 mL of alkylbenzene sulfonate aqueous solution (DRIWEL produced by FUJIFILM Corporation) was added as a dispersant into the beaker. Furthermore, 10 mL to 30 mL of diluted solution (ISOTON II produced by Beckman Coulter, Inc.) was added into the beaker and then dispersed for 3 minutes with a 20 W (Watt) ultrasonic disperser. Thereafter, the volume-average particle diameter of the adhesive particles was measured using a particle size analyzer (Multisizer produced by Beckman Coulter, Inc.) under conditions with an aperture diameter of 20 $\mu$m, a medium of ISOTON II, and the number of particles to be measured of 100,000.

<Average circularity of adhesive particles>

A vessel was preliminarily charged with 10 mL of deionized water, 0.02 g of surfactant (alkylbenzene sulfonate) was added into the vessel as a dispersant, 0.02 g of the adhesive particles were further added into the vessel, and these materials were then subjected to dispersion treatment for 3 minutes at 60 W (Watt) using an ultrasonic disperser. Adjustment was performed such that the concentration of the adhesive particles during the measurement was 3,000 particles/$\mu$L to 10,000 particles/$\mu$L, and 1,000 adhesive particles with an equivalent circle diameter of 0.4 $\mu$m or more were then measured using a flow particle image analyzer (FPIA-3000 produced by SYSMEX CORPORATION). Note that the circularity is represented by formula (I) below, and the average circularity is an arithmetic average of circularities of the measured 1,000 adhesive particles.

circularity = perimeter of circle having area equal to projected area of adhesive particle/perimeter of projection image of adhesive particle (I)

<Average stacking direction height of heat-resistant region>

A cross-section of a separator including a functional layer was observed using the above-described field emission scanning electron microscope (FE-SEM). The stacking direction heights of a heat-resistant region at 5 arbitrary points were measured from the obtained SEM image, and the average stacking direction height of the heat-resistant region was calculated as an average value of these measured values.

<Ratio of volume-average particle diameter of adhesive particles relative to average stacking direction height of heat-resistant region>

Values obtained as described above were used to calculate volume-average particle diameter/average stacking direction height.

<Ratio of content of heat-resistant fine particles relative to content of adhesive particles>

The charged amounts of heat-resistant fine particles and adhesive particles in production of a composition for a functional layer were used to determine a ratio (volume ratio and mass ratio) of the content of the heat-resistant fine particles relative to the content of the adhesive particles. Note that the density of alumina particles serving as heat-resistant fine particles was taken to be 4 g/cm$^3$ in this calculation.

<Low-temperature adhesiveness>

Produced positive electrode, negative electrode, and separator (including functional layers at both sides, in which the average stacking direction height of the heat-resistant region is 2.0 $\mu$m) were each cut out as 10 mm in width and 50 mm in length. The positive electrode and separator were stacked and then pressed by roll pressing under conditions of a temperature of 50°C, a load of 8 kN/m, and a pressing rate of 30 m/min to obtain a joined product in which the positive electrode and the separator were joined.
The joined product that was obtained was placed with the surface at the current collector-side of the positive electrode facing downward, and cellophane tape was affixed to the surface of the positive electrode. Tape prescribed by JIS Z1522 was used as the cellophane tape. Moreover, the cellophane tape was fixed to a horizontal test stage in advance. Next, one end of the separator was pulled vertically upward at a pulling speed of 50 mm/min to peel off the separator, and the stress during this peeling was measured.

The same operations as for when the positive electrode was used were performed with respect to the negative electrode produced in each example or comparative example so as to perform measurement of stress.

The measurement of stress described above was performed 6 times in total for 3 joined products of a positive electrode and a separator and 3 joined products of a negative electrode and a separator, an average value of the stress was determined, and the obtained average value was taken to be the peel strength (N/m).

The calculated peel strength was used to evaluate the low-temperature adhesiveness of a separator including a functional layer by the following standard. A larger peel strength indicates that the separator can display better low-temperature adhesiveness as a device member through the functional layer.

> A: Peel strength of 3 N/m or more
> B: Peel strength of not less than 2 N/m and less than 3 N/m
> C: Peel strength of not less than 1 N/m and less than 2 N/m
> D: Peel strength of less than 1 N/m

<Blocking resistance>

A produced separator (including functional layers at both sides, in which the average stacking direction height of the heat-resistant region is 2.0 $\mu$m) was cut out into two test specimens of 4 cm in width by 4 cm in length. The two test specimens that were obtained was overlapped with the functional layer-sides inside and then pressed for 2 minutes at a temperature of 40°C under pressure with 5 MPa to obtain a press body. One end of the obtained press body was fixed, another end of the press body was pulled vertically upward at a pulling speed of 50 mm/min to peel off the press body, and the stress during this peeling was measured. The obtained stress was taken to be the blocking strength. The blocking resistance was then evaluated by the following standard. A smaller blocking strength indicates that the functional layer can better inhibit occurrence of blocking, that is, indicates higher blocking resistance of the functional layer.

> A: Blocking strength of less than 4 N/m
> B: Blocking strength of not less than 4 N/m and less than 6 N/m
> C: Blocking strength of not less than 6 N/m

<Heat resistance>

A square of 12 cm in width by 12 cm in length was cut out from a produced separator (including functional layers at both sides, in which the average stacking direction height of the heat-resistant region is 2.0 $\mu$m), and then a square with a side length of 10 cm was drawn in an inner part (one side) of the obtained square to obtain a test specimen. The test specimen was placed inside a 150°C thermostatic tank and was left therein for 1 hour. The area change of the square drawn in the inner part (area change = {(area of square before being left - area of square after being left)/area of square before being left} $\times$ 100%) was subsequently determined as the heat shrinkage rate and was evaluated by the following standard. A smaller heat shrinkage rate indicates that a separator including a functional layer has better heat resistance.

> A: Heat shrinkage rate of less than 3%
> B: Heat shrinkage rate of not less than 3% and less than 5%
> C: Heat shrinkage rate of not less than 5% and less than 10%
> D: Heat shrinkage rate of 10% or more

<Rate characteristics>

A produced lithium ion secondary battery was left at rest in a 25°C environment for 24 hours, was subsequently subjected to a charge/discharge operation of charging to 4.35 V at 0.1C and discharging to 3.0 V at 0.1C in a 25°C environment, and the initial capacity C0 thereof was measured. Thereafter, the lithium ion secondary battery was subjected to a charge/discharge operation of charging to 4.35 V at 0.1C and discharging to 3.0 V at 2C in a 25°C environment, and the capacity C1 thereof was measured. Rate characteristics were evaluated through $\Delta C = (C0 - C1)/C0 \times 100\%$. A larger value for $\Delta C$ indicates that the lithium ion secondary battery has better rate characteristics.

> A: $\Delta C$ of 90% or more
> B: $\Delta C$ of not less than 85% and less than 90%

C: ΔC of not less than 80% and less than 85%

D: ΔC of less than 80%

<Cycle characteristics>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage: 4.20 V) by a 0.2C constant-current method and was CC discharged to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the $1^{st}$ cycle was defined as X1 and the discharge capacity of the $100^{th}$ cycle was defined as X2.

A capacity maintenance rate ΔC' was determined using the discharge capacity X1 and the discharge capacity X2 $(\Delta C' = (X2/X1) \times 100(\%))$ and was evaluated by the following standard. A larger value for the capacity maintenance rate ΔC' indicates that the lithium ion secondary battery has better cycle characteristics.

A: ΔC' of 93% or more

B: ΔC' of not less than 90% and less than 93%

C: ΔC' of less than 90%

(Example 1)

<Production of polyester polymer>

A four-necked flask of 0.5 L in capacity equipped with a nitrogen feeding tube, a dehydration tube, an agitator, and a thermocouple was charged with 2000 g of BPA-PO (propylene oxide adduct of bisphenol A; average number of moles added: 2.2 mol) and 800 g of BPA-EO (ethylene oxide adduct of bisphenol A; average number of moles added: 2.2 mol) as alcohol components; 600 g of fumaric acid and 500 g of trimellitic anhydride as carboxylic acid components; and 4 g of dibutyltin oxide, and a reaction was carried out at 220°C over 8 hours. Thereafter, the reaction was further carried out until the softening point (measured by the following method) of a reactant reached 150°C at 8.3 kPa to obtain a polyester polymer. The glass-transition temperature of the obtained polyester polymer was 62°C.

-Measurement method of softening point-

A Koka flow tester (produced by Shimadzu Corporation; product name: CFT-500D) was used to heat 1 g of the sample at a heating rate of 6°C/min, while a plunger applied a load of 1.96 MPa to the sample to extrude the sample through a nozzle of 1 mm in diameter and 1 mm in length. This drew a curve between a plunger downward movement (flow length) of the flow tester and a temperature. When the height of the S-shaped curve is h, the temperature corresponding to h/2 (temperature at which a half of the polymer flowed out) was taken to be the softening point.

<Production of ester wax (fusible additive)>

A four-necked flask of 0.5 L in capacity having a nitrogen feeding tube, an impeller, and a condenser attached thereto was charged with 18 g (0.13 mol) of pentaerythritol and 104 g (0.52 mol) of lauric acid. A reaction was carried out at 220°C for 10 hours under a stream of nitrogen while evaporating produced water. Next, 46.5 g of toluene, 32 g of 2-propanol, and 19 g of 10% potassium hydroxide aqueous solution containing potassium hydroxide in an amount of 2.0 equivalents of the acid value were added into the flask, 30 minutes of stirring and then 30 minutes of resting were performed at 70°C, and the aqueous layer portion was subsequently removed to obtain a crude product.

The crude product was washed with water four times at 70°C using 40 parts of deionized water relative to 100 parts of the crude product and was adjusted to a pH of 7. Solvent was evaporated from the resultant purified product under heated and reduced pressure conditions, and then filtration, solidification, and pulverization were performed to yield 140 g of pentaerythritol tetralaurate (melting point: 44°C) as an ester wax.

<Production of adhesive particles>

Adhesive particle materials (polyester polymer and ester wax) were made into particles by the following procedure using the dissolution and suspension method.

In a ball mill, 100 parts of polyester resin, 10 parts of ester wax, and 230 parts of toluene as an organic solvent were dispersed to obtain a liquid composition.

Separately, 480 parts of hydroxyapatite aqueous solution (concentration: 5%), 6 parts of sodium dodecylbenzenesulfonate aqueous solution (concentration: 1%), and 120 parts of water were mixed to prepare an aqueous medium.

The liquid composition was dispersed in the aqueous medium using a homogenizer. Note that the circumferential speed of a rotor was adjusted to a range of 6 m/sec to 8 m/sec. The obtained dispersion liquid was left under conditions of a temperature of 50°C to 70°C and a pressure of 30 mmHg to 150 mmHg to remove toluene. The composition after removing toluene was cooled, 12N hydrochloric acid was then added until the pH reached 2 to wash the composition, and water washing, drying, and classifying were further performed to obtain adhesive particles containing a polyester polymer and an ester wax. The volume-average particle diameter of the adhesive particles was 6.0 $\mu$m, and the average circularity thereof was 0.97.

<Production of binder>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator, the gas phase was purged with nitrogen gas, and the temperature was raised to 60°C.

Meanwhile, a monomer composition was produced in a separate vessel by mixing 50 parts of deionized water; 0.5 parts of sodium dodecylbenzenesulfonate as a dispersion stabilizer; 94 parts of n-butyl acrylate as a (meth)acrylic acid ester monomer; 2 parts of methacrylic acid as an acid group-containing monomer; 2 parts of acrylonitrile as a nitrile group-containing monomer; and 1 part of allyl methacrylate and 1 part of allyl glycidyl ether as cross-linkable monomers.

The obtained monomer composition was continuously added into the aforementioned reactor including a stirrer over 4 hours to perform polymerization. The reaction was carried out at 60°C during the addition. Once this addition was complete, a further 3 hours of stirring was performed at 70°C, and then the reaction was ended to yield a water dispersion containing a particulate binder as an acrylic polymer. The obtained binder had a volume-average particle diameter of 0.25 $\mu$m and a glass-transition temperature of -40°C.

<Production of composition for functional layer>

An alumina-containing slurry was obtained by adding 0.5 parts of polyacrylic acid as a water-soluble polymer to 100 parts of alumina (volume-average particle diameter: 0.5 $\mu$m) as heat-resistant fine particles, further adding deionized water to adjust the solid content concentration to 55%, and performing mixing thereof using a ball mill.

In addition, an adhesive particle-containing mixture having a solid content concentration of 40% was obtained by mixing 100 parts of the above-described adhesive particles, 0.2 parts of sodium dodecylbenzenesulfonate (NEOPELEX G-15 produced by Kao Corporation) as a dispersant, and deionized water.

The alumina-containing slurry and the adhesive particle-containing mixture were mixed such that the ratio (alumina/adhesive particles) of the alumina and the adhesive particles was 70/30 by volume (90/10 by mass). Deionized water, 6 parts in terms of solid content of the water dispersion containing the binder described above, and 1.5 parts of carboxymethyl cellulose as a water-soluble polymer (thickener) per 100 parts of alumina were then added to the resultant mixture to obtain a composition for a functional layer (solid content concentration: 40%).

<Production of separator including functional layer>

A microporous membrane (thickness: 12 $\mu$m) made of polyethylene was prepared as a separator substrate. The composition for a functional layer obtained as described above was applied onto one side of the prepared separator substrate by bar coating. The coating film was dried at 50°C. Next, the same operations as described above were performed with respect to the other side of the separator substrate to obtain a functional layer-equipped separator that included functional layers at both sides of the separator substrate. The two functional layers of the obtained separator both included adhesion regions formed of the adhesive particles and heat-resistant regions formed of alumina serving as heat-resistant fine particles and a binder, and the average stacking direction height of the heat-resistant regions was 2.0 $\mu$m.

Furthermore, low-temperature adhesiveness, blocking resistance, and heat resistance were evaluated for this separator including functional layers at both sides. The results are presented in Table 1.

<Production of positive electrode>

A slurry composition for a positive electrode was produced by mixing 100 parts of $LiCoO_2$ (volume-average particle diameter: 12 $\mu$m) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting these materials to a total solid content concentration of 70%, and mixing these materials in a planetary mixer.

The slurry composition for a positive electrode was applied onto aluminum foil of 20 $\mu$m in thickness serving as a current collector using a comma coater such as to have a thickness after drying of approximately 150 $\mu$m. The slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a positive electrode including a positive electrode mixed material layer (thickness: 60 $\mu$m).

<Production of negative electrode>

A 5 MPa pressure-resistant vessel equipped with a stirrer was charged with 33 parts of 1,3-butadiene; 3.5 parts of itaconic acid; 63.5 parts of styrene; 0.4 parts of sodium dodecylbenzenesulfonate as an emulsifier; 150 parts of deionized water; and 0.5 parts of potassium persulfate as a polymerization initiator. These materials were thoroughly stirred and were then heated to 50°C to initiate polymerization. At the point at which the polymerization conversion rate reached 96%, the reaction was quenched by cooling to yield a mixture containing a binder (SBR) for a negative electrode mixed material layer. The mixture containing the binder for a negative electrode mixed material layer was adjusted to pH 8 through addition of 5% sodium hydroxide aqueous solution and was subsequently subjected to thermal-vacuum distillation to remove unreacted monomer. Thereafter, the mixture was cooled to 30°C or lower to obtain a water dispersion containing the target binder for a negative electrode mixed material layer.

After blending 80 parts of artificial graphite (volume-average particle diameter: 15.6 $\mu$m) and 16 parts of a silicon-based active material $SiO_x$ (volume-average particle diameter: 4.9 $\mu$m) as negative electrode active materials and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith to adjust the solid content concentration to 68%, a further 60 minutes of mixing was performed at 25°C. The solid content concentration was further adjusted to 62% with deionized water, and then a further 15 minutes of mixing was performed at 25°C to obtain a mixture. Deionized water and 1.5 parts in terms of solid content of the water dispersion containing the binder for a negative electrode mixed material layer described above were added to this mixture, the final solid content concentration was adjusted to 52%, and a further 10 minutes of mixing was performed to obtain a mixture. This mixture was subjected to defoaming under reduced pressure to yield a slurry composition for a negative electrode having good fluidity.

The slurry composition for a negative electrode was applied onto copper foil of 20 $\mu$m in thickness serving as a current collector using a comma coater such as to have a thickness after drying of approximately 150 $\mu$m. The slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a negative electrode including a negative electrode mixed material layer (thickness: 80 $\mu$m).

<Production of lithium ion secondary battery>

The positive electrode produced as described above was cut out as a rectangle of 49 cm $\times$ 5 cm and was placed such that the surface at the positive electrode mixed material layer-side thereof faced upward. A separator (including functional layers at both sides) that had been cut out as 120 cm $\times$ 5.5 cm was arranged on the positive electrode mixed material layer of the positive electrode such that the positive electrode was positioned at one side of the separator in a longitudinal direction. In addition, the negative electrode produced as described above was cut out as a rectangle of 50 cm $\times$ 5.2 cm and was arranged on the separator such that the surface at the negative electrode mixed material layer-side thereof faced toward the separator and such that the negative electrode was positioned at the other side of the separator in the longitudinal direction. The resultant laminate was wound by a winding machine to obtain a roll.

This roll was pressed into a flattened form at 50°C and 1 MPa, was subsequently enclosed in an aluminum packing case serving as a battery case, and then electrolyte solution (solvent: ethylene carbonate/diethyl carbonate/-vinylene carbonate (volume ratio) = 68.5/30/1.5; electrolyte: $LiPF_6$ of 1 mol in concentration) was injected such that no air remained. An opening of the aluminum packing case was then closed by heat sealing at a temperature of 150°C to produce a wound lithium ion secondary battery having a capacity of 800 mAh.

Rate characteristics and cycle characteristics were evaluated for the obtained lithium ion secondary battery. The results are presented in Table 1.

(Example 2 to 5)

A polyester polymer, an ester wax, adhesive particles, a binder, a composition for a functional layer, a separator, a negative electrode, a positive electrode, and a lithium ion secondary battery were obtained in the same way as in Example 1 with the exception that the amount of the ester wax serving as a fusible additive was changed to 5 parts (Example 2), 20 parts (Example 3), 30 parts (Example 4), or 35 parts (Example 5) in production of the adhesive particles. Various evaluations were performed in the same way as in Example 1. The results are presented in Table 1.

(Example 6)

In production of an ester wax serving as a fusible additive, behenic acid was used instead of lauric acid so as to obtain pentaerythritol tetrabehenate (melting point: 81°C) as an ester wax. A polyester polymer, adhesive particles, a binder, a composition for a functional layer, a separator, a negative electrode, a positive electrode, and a lithium ion secondary battery were then obtained in the same way as in Example 1 with the exception that this ester wax was used. Various evaluations were performed in the same way as in Example 1. The results are presented in Table 1.

(Example 7)

A polyester polymer, adhesive particles, a binder, a composition for a functional layer, a separator, a negative electrode, a positive electrode, and a lithium ion secondary battery were obtained in the same way as in Example 1 with the exception that an ester wax serving as a fusible additive was not produced and the fusible additive was not used in production of the adhesive particles. Various evaluations were performed in the same way as in Example 1. The results are presented in Table 1.

(Example 8)

A polyester polymer, an ester wax, adhesive particles, a binder, a composition for a functional layer, a separator, a negative electrode, a positive electrode, and a lithium ion secondary battery were obtained in the same way as in Example 1 with the exception that the concentration of a hydroxyapatite aqueous solution was changed to 10% and the volume-average particle diameter of the adhesive particles in the laminate was changed to 3 $\mu$m in production of the adhesive particles. Various evaluations were performed in the same way as in Example 1. The results are presented in Table 1.

(Example 9)

A polyester polymer, an ester wax, adhesive particles, a binder, a composition for a functional layer, a separator, a negative electrode, a positive electrode, and a lithium ion secondary battery were obtained in the same way as in Example 1 with the exception that the concentration of a hydroxyapatite aqueous solution was changed to 3% and the volume-average particle diameter of the adhesive particles in the laminate was changed to 9 $\mu$m in production of the adhesive particles. Various evaluations were performed in the same way as in Example 1. The results are presented in Table 2.

(Example 10)

A polyester polymer, adhesive particles, a binder, a composition for a functional layer, a separator, a negative electrode, a positive electrode, and a lithium ion secondary battery were obtained in the same way as in Example 1 with the exception that a crystalline polyester resin that has been produced as described below was used as a fusible additive instead of the ester wax. Various evaluations were performed in the same way as in Example 1. The results are presented in Table 2.

<Production of crystalline polyester resin (fusible additive)>

A four-necked flask of 0.5 L equipped with a nitrogen feeding tube, a dehydration tube, an agitator, and a thermocouple was charged with sebacic acid as a carboxylic acid component and 1,6-hexanediol as an alcohol component such that OH/COOH, a molar ratio of a hydroxy group and a carboxyl group is 0.85, a reaction was carried out together with titanium tetraisopropoxide (500 ppm relative to a resin component) at 180°C for 10 hours, the reaction was then carried out for 3 hours by raising the temperature to 200°C, and the reaction was further carried out for 2 hours at a pressure of 8.3 kPa to obtain a crystalline polyester resin (melting point: 65°C). Note that it was confirmed that this crystalline polyester resin had no glass-transition temperature in a range of not lower than 10°C and not higher than 95°C.

(Example 11)

A polyester polymer, adhesive particles, a binder, a composition for a functional layer, a separator, a negative electrode, a positive electrode, and a lithium ion secondary battery were obtained in the same way as in Example 1 with the exception that 5 parts of paraffin wax (produced by Nippon Seiro Co., Ltd.; product name: HNP-11; melting point: 68°C) was used as a fusible additive instead of 10 parts of ester wax in production of the adhesive particles. Various evaluations were performed in the same way as in Example 1. The results are presented in Table 2.

(Examples 12 and 13)

A polyester polymer, an ester wax, adhesive particles, a binder, a composition for a functional layer, a separator, a negative electrode, a positive electrode, and a lithium ion secondary battery were obtained in the same way as in Example 1 with the exception that the alumina-containing slurry and the adhesive particle-containing mixture were mixed such that the mixing ratio (alumina particles/adhesive particles) of the alumina particles and the adhesive particles was 80/20 by volume (94/6 by mass, Example 12) or 55/45 by volume (82/18 by mass, Example 13) in production of the composition for a functional layer. Various evaluations were performed in the same way as in Example 1. The results are presented in Table 2.

(Example 14)

An ester wax, adhesive particles, a binder, a composition for a functional layer, a separator, a negative electrode, a positive electrode, and a lithium ion secondary battery were obtained in the same way as in Example 1 with the exception that a polyester polymer produced as described below was used. Various evaluations were performed in the same way as in Example 1. The results are presented in Table 2.

<Production of polyester polymer>

A reaction vessel was charged with 143 parts of BPA-PO (propylene oxide adduct of bisphenol A; average number of moles added: 2.2 mol) as an alcohol component; 133 parts of terephthalic acid and 33 parts of isophthalic acid as carboxylic acid components; and 0.2 parts of dibutyltin oxide. The temperature was gradually raised while blowing nitrogen gas into the reaction vessel to promote condensation reaction at 180°C for 5 hours, and the reaction was then completed at 230°C to obtain a polyester polymer. The glass-transition temperature of the obtained polyester polymer was 56°C.

(Example 15)

A polyester polymer, an ester wax, a binder, a composition for a functional layer, a separator, a negative electrode, a positive electrode, and a lithium ion secondary battery were obtained in the same way as in Example 1 with the exception that adhesive particles produced as described below were used. Various evaluations were performed in the same way as in Example 1. The results are presented in Table 2.

<Production of adhesive particles>

Adhesive particle materials (polyester polymer and ester wax) were made into particles by the following procedure using the emulsification and aggregation method.

<<Production of fusible additive dispersion liquid>>

100 parts of the ester wax (fusible additive) obtained in the same way as in Example 1, 1 part of anionic surfactant (produced by DKS Co. Ltd.; product name: NEOGEN® RK (NEOGEN is a registered trademark in Japan, other countries, or both)), and 350 parts of deionized water were mixed, heated to 100°C, and dispersed using a homogenizer (ULTRA-TURRAX T50 produced by IKA), and these materials were then subjected to dispersion treatment with a Manton-Gaulin high-pressure homogenizer (produced by GAULIN) to obtain a fusible additive dispersion liquid (solid content concentration: 20%) in which an ester wax with a volume-average particle diameter of 200 nm was dispersed.

<<Production of polymer particle dispersion liquid>>

A vessel equipped with a temperature adjustment means and a nitrogen purge means was charged with 40 parts of ethyl acetate and 25 parts of 2-butanol to make a mixed solvent, and 100 parts of the polyester polymer obtained in the same way as in Example 1 was then gradually added into the vessel and dissolved therein. A 10 mass% ammonia aqueous solution (with an amount equivalent to 3 times the acid value of the polyester polymer in molar ratio) was further added into the vessel and stirred for 30 minutes to make a mixture.

Next, the vessel was purged with dry nitrogen, the temperature was maintained at 40°C, and 400 parts of deionized water was dropped at a rate of 2 parts/min while stirring the mixture to perform emulsification. After the end of dropping, the temperature of the emulsified liquid was returned to room temperature (not lower than 20°C and not higher than 25°C), bubbling was performed for 48 hours using dry nitrogen while stirring the emulsified liquid to reduce ethyl acetate and 2-butanol to 1,000 ppm or less. Furthermore, deionized water was added into the vessel to adjust the solid content concentration to 20%, thus obtaining a polymer particle dispersion liquid in which polymer particles with a volume-average particle diameter of 200 nm were dispersed.

<<Emulsification and aggregation>>

It was prepared an apparatus in which a round flask (made of stainless) was connected to a vessel A (polyester bottle) through a tube pump A, driving of the tube pump A delivered a contained liquid contained in the vessel A to the flask, the vessel A was connected to a vessel B through a tube pump B, and driving of the tube pump B delivered a contained liquid contained in the vessel B to the vessel A. The following operation was performed using this apparatus.

The round flask in the apparatus described above was charged with 500 parts of the polymer particle dispersion liquid obtained as described above and an anionic surfactant (product name: TAYCAPOWER® (TAYCAPOWER is a registered trademark in Japan, other countries, or both)), and 0.1 N of nitric acid was added into the flask to adjust the pH to 3.5. Then, 30 parts of nitric acid aqueous solution with a polyaluminum chloride concentration of 10 mass% was added into the flask. Subsequently, these materials were dispersed at 30°C using a homogenizer (ULTRA-TURRAX T50 produced by IKA), and the particle diameter of aggregated particles was then increased while raising the temperature at a pace of 1°C/30 minutes in an oil bath for heating.

On the other hand, 150 parts of the polymer particle dispersion liquid obtained as described above was added into the vessel A in the apparatus described above, and 25 parts of the fusible additive dispersion liquid obtained as described above was similarly added into the vessel B. Next, the liquid delivery speed of the tube pump A was set to 0.70 parts/min, the liquid delivery speed of the tube pump B was set to 0.14 parts/min, and the tube pumps A and B were driven from the point at which the temperature in the round flask in which aggregated particles were being formed reached 37.0°C to start delivery of each dispersion liquid. This gradually increased the concentration of the fusible additive, while a mixed dispersion liquid in which the polymer particles and the fusible additive have been dispersed was delivered from the vessel A to the round flask in which aggregated particles were being formed.

Then, delivery of each dispersion liquid to the round flask was completed, and each dispersion liquid was held for 30 minutes from the point at which the temperature in the round flask reached 48°C.

Thereafter, 50 parts of the polymer particle dispersion liquid obtained as described above was slowly added into the round flask to be held for 1 hour. Next, 0.1 N of sodium hydroxide aqueous solution was added into the round flask to adjust the pH to 8.5, these materials were then heated to 85°C with continued stirring and held for 5 hours. Then, these materials were cooled to 20°C at a rate of 20°C/min, filtered, sufficiently washed with deionized water, and then dried to obtain adhesive particles containing the polyester polymer and the ester wax (an amount of the ester wax being 10 parts per 100 parts of the polyester polymer). The volume-average particle diameter of the adhesive particles was 6.0 μm, and the average circularity thereof was 0.96.

(Example 16)

A polyester polymer, an ester wax, a binder, a composition for a functional layer, a separator, a negative electrode, a positive electrode, and a lithium ion secondary battery were obtained in the same way as in Example 1 with the exception that adhesive particles produced as described below were used. Various evaluations were performed in the same way as in Example 1. The results are presented in Table 2.

<Production of adhesive particles>

Adhesive particle materials (polyester polymer and ester wax) were made into particles by the following procedure using the pulverization method.

A co-rotating twin-screw extruder (overall length of kneading part: 1560 mm; screw diameter: 42 mm; barrel bore:

43 mm) was used to melt and knead 100 parts of polyester polymer and 10 parts of ester wax, and these materials were then cooled and coarsely crushed. The material supply rate to the extruder during melting and kneading was 10 kg/hour, and the average residence time was about 18 seconds.

Thereafter, the obtained coarsely crushed product was crushed with a jet mill and classified to obtain adhesive particles containing the polyester polymer and the ester wax. The volume-average particle diameter of the adhesive particles was 6.0 $\mu$m, and the average circularity thereof was 0.94.

(Example 17)

A polyester polymer, an ester wax, a binder, a composition for a functional layer, a separator, a negative electrode, a positive electrode, and a lithium ion secondary battery were obtained in the same way as in Example 1 with the exception that adhesive particles produced as described below were used. Various evaluations were performed in the same way as in Example 1. The results are presented in Table 3.

<Production of adhesive particles>

<<Production of monomer composition>>

4.7 parts of the polyester polymer obtained in the same way as in Example 1, 61.2 parts of styrene as an aromatic monovinyl monomer, 34.1 parts of n-butyl acrylate as a (meth)acrylic acid ester monomer, and 0.01 parts of divinylbenzene as a cross-linkable monomer were mixed. Furthermore, 12 parts of the ester wax obtained in the same way as in Example 1 was added to the obtained mixture and mixed again to produce a monomer composition.

<<Production of colloidal dispersion liquid containing dispersion stabilizer (metal hydroxide)>>

An aqueous solution (sodium hydroxide aqueous solution) of 5.6 parts of sodium hydroxide dissolved in 50 parts of deionized water was gradually added under stirring to an aqueous solution (magnesium chloride aqueous solution) of 8.0 parts of magnesium chloride dissolved in 200 parts of deionized water so as to produce a colloidal dispersion liquid containing magnesium hydroxide as a dispersion stabilizer (metal hydroxide).

<<Suspension polymerization>>

The above-described monomer composition was added to this colloidal dispersion liquid, was further stirred therewith, and then 2.0 parts of t-butyl peroxy-2-ethylhexanoate (produced by NOF Corporation; product name: PERBUTYL O) was added as a polymerization initiator to obtain a mixture. The obtained mixture was subjected to 1 minute of high-shear stirring at a rotation speed of 15,000 rpm using an inline emulsifying/dispersing device (produced by Pacific Machinery & Engineering Co., Ltd.; product name: CAVITRON) so as to form droplets of the monomer composition in the colloidal dispersion liquid.

The colloidal dispersion liquid having droplets of the monomer composition formed therein was loaded into a reactor and was heated to 90°C and caused to undergo a polymerization reaction for 5 hours to yield a water dispersion containing adhesive particles.

<<Drying>>

The water dispersion containing adhesive particles was stirred while adding sulfuric acid dropwise at room temperature (25°C) and performing acid washing until the pH was 6.5 or lower. Next, separation by filtration was performed, 500 parts of deionized water was added to the obtained solid content to form a slurry once again, and water washing treatment (washing, filtration, and dehydration) was repeated a number of times. Separation by filtration was then performed, and the obtained solid content was loaded into a vessel of a dryer and was dried at 40°C for 48 hours to yield adhesive particles.

Note that the adhesive particles contained an adhesive polymer having a core-shell structure including a core portion formed of an aromatic monovinyl polymer and a shell portion formed of a polyester polymer; and an ester wax.

(Example 18)

A polyester polymer, an ester wax, adhesive particles, a binder, a composition for a functional layer, a separator, a negative electrode, a positive electrode, and a lithium ion secondary battery were obtained in the same way as in Example 1 with the exception that organic fine particles produced as described below were used instead of alumina particles in production of the composition for a functional layer. Various evaluations were performed in the same way as in Example 1. The results are presented in Table 3.

<Production of organic fine particles (heat-resistant fine particle)>

A reactor A including a stirrer was charged with 0.20 parts of sodium dodecyl sulfate, 0.30 parts of ammonium persulfate, and 180 parts of deionized water. These materials were mixed to obtain a mixture and were heated to 65°C. Meanwhile, a monomer composition for seed particles was produced in a separate vessel by mixing 80.0 parts of n-butyl acrylate as a (meth)acrylic acid ester monomer, 10.0 parts of methacrylic acid as an acid group-containing monomer, 10.0 parts of acrylonitrile as a nitrile group-containing monomer, 0.8 parts of sodium dodecyl sulfate, and 40 parts of deionized water.

This monomer composition for seed particles was continuously added into the aforementioned reactor A over 4 hours to carry out a polymerization reaction. The internal temperature of the reactor during continuous addition of the monomer composition for seed particles was maintained at 65°C. Moreover, once the continuous addition was complete, the polymerization reaction was continued for a further 3 hours at 80°C. This yielded a water dispersion of seed particles. The volume-average particle diameter of the seed particles measured in the same way as for a binder was 120 nm.

Next, 20 parts in terms of solid content of the water dispersion of seed particles described above (composed of 16 parts of n-butyl acrylate units, 2 parts of methacrylic acid units, and 2 parts of acrylonitrile units), 80 parts of ethylene glycol dimethacrylate (produced by Kyoeisha Chemical Co., Ltd.; product name: LIGHT ESTER EG) as a cross-linkable monomer, 0.8 parts of sodium dodecylbenzenesulfonate, 3.2 parts of t-butyl peroxy-2-ethylhexanoate (produced by NOF Corporation; product name: PERBUTYL O) as a polymerization initiator, and 160 parts of deionized water were loaded into a reactor including a stirrer and were stirred at 35°C for 12 hours to cause complete absorption of the cross-linkable monomer and the polymerization initiator by the seed particles. The internal temperature of the reactor was subsequently maintained at 90°C while carrying out a polymerization reaction (seeded polymerization) for 5 hours.

Next, unreacted monomer and initiator decomposition product were removed through introduction of steam so as to obtain a water dispersion of organic fine particles (volume-average particle diameter: 0.5 μm). The glass-transition temperature of the obtained organic fine particles was measured by the same method as for adhesive particles and a binder, but a peak was not observed in the measurement temperature range (-100°C to 200°C). Thus, the glass-transition temperature of the organic fine particles was confirmed to be higher than 200°C.

(Comparative Example 1)

A binder, a composition for a functional layer, a separator, a negative electrode, a positive electrode, and a lithium ion secondary battery were obtained in the same way as in Example 1 with the exception that a polyester polymer and an ester wax were not produced and adhesive particles produced as described below were used. Various evaluations were performed in the same way as in Example 1. The results are presented in Table 3.

<Production of adhesive particles>

A monomer composition was produced by mixing 81.9 parts of styrene as an aromatic monovinyl monomer, 18 parts of 2-ethylhexyl acrylate as a (meth)acrylic acid ester monomer, and 0.1 parts of ethylene glycol dimethacrylate as a cross-linkable monomer.

A colloidal dispersion liquid was produced in the same way as in Example 17 with the exception that the monomer composition described above was used, and suspension polymerization and drying were then performed to obtain adhesive particles.

(Comparative Example 2)

A binder, a composition for a functional layer, a separator, a negative electrode, a positive electrode, and a lithium ion secondary battery were obtained in the same way as in Example 1 with the exception that a polyester polymer and an ester wax were not produced and adhesive particles produced as described below were used. Various evaluations were performed in the same way as in Example 1. The results are presented in Table 3.

<Production of adhesive particles>

A monomer composition was produced by mixing 60.9 parts of styrene as an aromatic monovinyl monomer, 39 parts of 2-ethylhexyl acrylate as a (meth)acrylic acid ester monomer, and 0.1 parts of ethylene glycol dimethacrylate as a cross-linkable monomer.

A colloidal dispersion liquid was produced in the same way as in Example 17 with the exception that the monomer composition described above was used, and suspension polymerization and drying were then performed to obtain adhesive particles.

(Comparative Example 3)

A binder, a composition for a functional layer, a separator, a negative electrode, a positive electrode, and a lithium ion secondary battery were obtained in the same way as in Example 1 with the exception that a polyester polymer and an ester wax were not produced and adhesive particles produced as described below were used. Various evaluations were performed in the same way as in Example 1. The results are presented in Table 3.

<Production of adhesive particles>

A mixture was obtained by mixing 81.9 parts of styrene as an aromatic monovinyl monomer, 18 parts of 2-ethylhexyl acrylate as a (meth)acrylic acid ester monomer, and 0.1 parts of ethylene glycol dimethacrylate as a cross-linkable monomer. Next, 5 parts of polyethylene wax (melting point: 95°C; number-average molecular weight: 7,300) was added to the obtained mixture and mixed again to produce a monomer composition.

A colloidal dispersion liquid was produced in the same way as in Example 17 with the exception that the monomer composition described above was used, and suspension polymerization and drying were then performed to obtain adhesive particles.

(Comparative Example 4)

A polyester polymer, an ester wax, adhesive particles, a binder, a composition for a functional layer, a separator, a negative electrode, a positive electrode, and a lithium ion secondary battery were obtained in the same way as in Example 1 with the exception that alumina particles were not used in production of the composition for a functional layer. Various evaluations were performed in the same way as in Example 1. The results are presented in Table 3.

(Comparative Example 5)

An ester wax, adhesive particles, a binder, a composition for a functional layer, a separator, a negative electrode, a positive electrode, and a lithium ion secondary battery were obtained in the same way as in Example 1 with the exception that a polyester polymer produced as described below was used. Various evaluations were performed in the same way as in Example 1. The results are presented in Table 3.

<Production of polyester polymer>

A mixture formed of 1661 parts of terephthalic acid as a carboxylic acid component; and 1316 parts of bisphenoxyethanol fluorene (BPEF), 1094 parts of neopentylglycol, and 2.7 parts of trimethylolpropane as alcohol components (terephthalic acid:BPEF:neopentylglycol:trimethylolpropane = 100:30:105:0.2 (molar ratio)) was controlled in an autoclave for 3 hours at 0.3 MPa at 260°C under stirring, and the pressure was then discharged to carry out a reaction for 3 hours at normal pressure at 260°C. Next, the temperature was raised to 270°C, 6.8 parts of tetrabutyltitanate (20 $\times 10^{-4}$ mol per mol of terephthalic acid) as a catalyst was added to the mixture, and the pressure of the system was gradually reduced to be 13 Pa after 1.5 hours to continue the reaction. Condensation was performed until an appropriate viscosity was obtained, and pellet-like polyester polymers were then obtained using a strand cutter. The glass-transition temperature of the obtained polyester polymer was 100°C.

(Comparative Example 6)

An ester wax, adhesive particles, a binder, a composition for a functional layer, a separator, a negative electrode, a positive electrode, and a lithium ion secondary battery were obtained in the same way as in Example 1 with the exception that a polyester polymer produced as described below was used. Various evaluations were performed in the same way as in Example 1. The results are presented in Table 3.

<Production of polyester polymer>

A four-necked flask of 0.5 L in capacity equipped with a nitrogen feeding tube, a dehydration tube, an agitator, and a thermocouple was charged with 900 parts of ethylene glycol as an alcohol component, 2000 parts of dimethyl terephthalate as a carboxylic acid component, and 4 parts of dibutyltin oxide, and the temperature was raised from 165°C to 200°C over 70 minutes to carry out a reaction. Next, 1 part of trimethylphosphate was added to the flask to carry out the reaction for 35 minutes. Next, 1000 parts of dodecanedioic acid as a carboxylic acid component was added to the flask to raise the temperature to 240°C over 30 minutes, thus carrying out the reaction. The temperature was further raised to 265°C to carry out the reaction for 4 hours at 0.1 mmHg, thus obtaining a polyester polymer. The glass-transition temperature of the obtained polyester polymer was 0°C.

In Tables 1 to 3, presented below:

"PES polymer" indicates polyester polymer;
"Aromatic" indicates aromatic vinyl-based polymer;
"Additive" indicates fusible additive;
"PES resin" indicates crystalline polyester resin;
"Acrylic" indicates acrylic polymer;
"Organic" indicates organic fine particles;
"Particle diameter of adhesive particles/height of heat-resistant region" indicates volume-average particle diameter of adhesive particles/average stacking direction height of heat-resistant region; and
"PE" indicates microporous membrane of polyethylene.

[Table 1]

| | | | Example 1 | Example 2 | Example 3 | Example 4 | Example 5 | Example 6 | Example 7 | Example 8 |
|---|---|---|---|---|---|---|---|---|---|---|
| Laminate | Functional layer | Adhesive particle — Adhesive polymer — PES polymer — Tg [°C] | 62 | 62 | 62 | 62 | 62 | 62 | 62 | 62 |
| | | Others — Type | - | - | - | - | - | - | - | - |
| | | Others — Tg [°C] | - | - | - | - | - | - | - | - |
| | | Additive — Type | Ester wax | Ester wax | Ester wax | Ester wax | Ester wax | Ester wax | - | Ester wax |
| | | Additive — Melting point [°C] | 44 | 44 | 44 | 44 | 44 | 81 | - | 44 |
| | | Additive — Content [part by mass] (relative to 100 parts by mass of adhensive polymer) | 10 | 5 | 20 | 30 | 35 | 10 | - | 10 |
| | | Volume-average particle diameter [μm] | 6 | 6 | 6 | 6 | 6 | 6 | 6 | 3 |
| | | Average circularity [-] | 0.97 | 0.97 | 0.97 | 0.97 | 0.97 | 0.97 | 0.97 | 0.97 |
| | | Binder — Type | Acrylic | Acrylic | Acrylic | Acrylic | Acrylic | Acrylic | Acrylic | Acrylic |
| | | Binder — Content [part by mass] (relative to 100 parts by mass of heat-resistant fine particle) | 6 | 6 | 6 | 6 | 6 | 6 | 6 | 6 |
| | | Heat-resistant fine particle — Type | Alumina | Alumina | Alumina | Alumina | Alumina | Alumina | Alumina | Alumina |
| | | Heat-resistant fine particle — Volume-average particle diameter [mm] | 0.5 | 0.5 | 0.5 | 0.5 | 0.5 | 0.5 | 0.5 | 0.5 |
| | | Heat-resistant fine particle/Adhesive particle — Volume ratio | 70/30 | 70/30 | 70/30 | 70/30 | 70/30 | 70/30 | 70/30 | 70/30 |
| | | Heat-resistant fine particle/Adhesive particle — Mass ratio | 90/10 | 90/10 | 90/10 | 90/10 | 90/10 | 90/10 | 90/10 | 90/10 |
| | | Average stacking direction height of heat-resistant region [μm] | 2 | 2 | 2 | 2 | 2 | 2 | 2 | 2 |
| | | Particle diameter of adhesive particle/Height of heat-resistant region [-] | 3 | 3 | 3 | 3 | 3 | 3 | 3 | 1.5 |
| | Substrate — Type | | PE | PE | PE | PE | PE | PE | PE | PE |
| | Low-temperature adhesiveness | | A | B | A | A | A | B | B | B |
| | Heat resistance | | A | A | A | A | A | A | A | B |
| | Blocking resistance | | A | A | A | A | B | A | A | B |

(continued)

| | Example 1 | Example 2 | Example 3 | Example 4 | Example 5 | Example 6 | Example 7 | Example 8 |
|---|---|---|---|---|---|---|---|---|
| Rate characteristics | A | A | B | B | B | A | A | A |
| Cycle characteristics | A | A | A | B | B | A | A | A |

[Table 2]

| | | | | | | Example 9 | Example 10 | Example 11 | Example 12 | Example 13 | Example 14 | Example 15 | Example 16 |
|---|---|---|---|---|---|---|---|---|---|---|---|---|---|
| Laminate | Functional layer | Adhesive particle | Adhesive polymer | PES polymer | Tg [°C] | 62 | 62 | 62 | 62 | 62 | 56 | 62 | 62 |
| | | | | Others | Type | - | - | - | - | - | - | - | - |
| | | | | | Tg [°C] | - | - | - | - | - | - | - | - |
| | | | Additive | Type | | Ester wax | PES resin | Paraffin wax | Ester wax | Ester wax | Ester wax | Ester wax | Ester wax |
| | | | | Melting point [°C] | | 44 | 65 | 68 | 44 | 44 | 44 | 44 | 44 |
| | | | | Content [part by mass] (relative to 100 parts by mass of adhensive polymer) | | 10 | 10 | 5 | 10 | 10 | 10 | 10 | 10 |
| | | | Volume-average particle diameter [μm] | | | 9 | 6 | 6 | 6 | 6 | 6 | 6 | 6 |
| | | | Average circularity [-] | | | 0.97 | 0.97 | 0.97 | 0.97 | 0.97 | 0.97 | 0.96 | 0.94 |
| | | Binder | Type | | | Acrylic | Acrylic | Acrylic | Acrylic | Acrylic | Acrylic | Acrylic | Acrylic |
| | | | Content [part by mass] (relative to 100 parts by mass of heat-resistant fine particle) | | | 6 | 6 | 6 | 6 | 6 | 6 | 6 | 6 |
| | | Heat-resistant fine particle | Type | | | Alumina | Alumina | Alumina | Alumina | Alumina | Alumina | Alumina | Alumina |
| | | | Volume-average particle diameter [mm] | | | 0.5 | 0.5 | 0.5 | 0.5 | 0.5 | 0.5 | 0.5 | 0.5 |
| | | Heat-resistant fine particle/Adhesive particle | Volume ratio | | | 70/30 | 70/30 | 70/30 | 80/20 | 55/45 | 70/30 | 70/30 | 70/30 |
| | | | Mass ratio | | | 90/10 | 90/10 | 90/10 | 94/6 | 82/18 | 90/10 | 90/10 | 90/10 |
| | | Average stacking direction height of heat-resistant region [μm] | | | | 2 | 2 | 2 | 2 | 2 | 2 | 2 | 2 |
| | | Particle diameter of adhesive particle/Height of heat-resistant region [-] | | | | 4.5 | 3 | 3 | 3 | 3 | 3 | 3 | 3 |
| | Substrate | Type | | | | PE | PE | PE | PE | PE | PE | PE | PE |
| Low-temperature adhesiveness | | | | | | B | B | B | B | A | A | B | B |
| Heat resistance | | | | | | A | A | A | A | B | A | A | A |

EP 4 261 921 B1

32

(continued)

| | Example 9 | Example 10 | Example 11 | Example 12 | Example 13 | Example 14 | Example 15 | Example 16 |
|---|---|---|---|---|---|---|---|---|
| Blocking resistance | A | A | A | A | A | A | A | A |
| Rate characteristics | A | A | A | A | A | A | A | A |
| Cycle characteristics | A | A | A | A | A | A | A | A |

[Table 3]

| | | | | | | Example 17 | Example 18 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Laminate | Functional layer | Adhesive particle | Adhesive polymer | PES polymer | Tg [°C] | 62 | 62 | - | - | - | 62 | 100 | 0 |
| | | | | Others | Type | Aromatic | - | Aromatic | Aromatic | Aromatic | - | - | - |
| | | | | | Tg [°C] | 68 | - | 66 | 38 | 66 | - | - | - |
| | | | Additive | Type | | Ester wax | Ester wax | - | - | Polyethylene wax | Ester wax | Ester wax | Ester wax |
| | | | | Melting point [°C] | | 44 | 44 | - | - | 95 | 44 | 44 | 44 |
| | | | | Content [part by mass] (relative to 100 parts by mass of adhensive polymer) | | 12 | 10 | - | - | 5 | 10 | 10 | 10 |
| | | | Volume-average particle diameter [μm] | | | 6 | 6 | 6 | 6 | 6 | 6 | 6 | 6 |
| | | | Average circularity [-] | | | 0.97 | 0.97 | 0.98 | 0.98 | 0.97 | 0.97 | 0.97 | 0.97 |
| | | Binder | Type | | | Acrylic | Acrylic | Acrylic | Acrylic | Acrylic | Acrylic | Acrylic | Acrylic |
| | | | Content [part by mass] (relative to 100 parts by mass of heat-resistant fine particle) | | | 6 | 6 | 6 | 6 | 6 | 6 | 6 | 6 |
| | | Heat-resistant fine particle | Type | | | Alumina | Organic | Alumina | Alumina | Alumina | - | Alumina | Alumina |
| | | | Volume-average particle diameter [mm] | | | 0.5 | 0.5 | 0.5 | 0.5 | 0.5 | - | 0.5 | 0.5 |
| | | Heat-resistant fine particle/Adhesive particle | Volume ratio | | | 70/30 | 70/30 | 70/30 | 70/30 | 70/30 | 0/100 | 70/30 | 70/30 |
| | | | Mass ratio | | | 90/10 | 70/30 | 90/10 | 90/10 | 90/10 | 0/100 | 90/10 | 90/10 |
| | | Average stacking direction height of heat-resistant region [μm] | | | | 2 | 2 | 2 | 2 | 2 | - | 2 | 2 |
| | | Particle diameter of adhesive particle/Height of heat-resistant region [-] | | | | 3 | 3 | 3 | 3 | 3 | - | 3 | 3 |

EP 4 261 921 B1

34

(continued)

| | Type | Example 17 | Example 18 | Comparative Example 1 | Comparative Example 2 | Comparative Example 3 | Comparative Example 4 | Comparative Example 5 | Comparative Example 6 |
|---|---|---|---|---|---|---|---|---|---|
| Substrate | | PE | PE | PE | PE | PE | PE | PE | PE |
| | Low-temperature adhesiveness | A | A | D | A | D | C | D | A |
| | Heat resistance | A | B | A | A | A | D | A | D |
| | Blocking resistance | A | A | A | C | A | C | A | D |
| | Rate characteristics | A | A | A | A | A | D | D | D |
| | Cycle characteristics | A | A | A | A | A | C | D | D |

It can be seen from Tables 1 to 3 that the laminates of Examples 1 to 18 can each be used well as a separator having excellent low-temperature adhesiveness, blocking resistance, and heat resistance. It can also be seen that a lithium ion secondary battery having excellent rate characteristics and cycle characteristics is obtained in Examples 1 to 18.

INDUSTRIAL APPLICABILITY

According to the present disclosure, it is possible to provide a laminate for an electrochemical device that can advantageously be used as a device member having excellent blocking resistance and low-temperature adhesiveness, and also to provide an electrochemical device including this laminate for an electrochemical device as a device member.

REFERENCE SIGNS LIST

| 100 | laminate |
| 10 | functional layer |
| 11 | adhesion region |
| 11a | adhesive particle |
| 12 | heat-resistant region |
| 12a | heat-resistant fine particle |
| 12b | binder |
| 20 | substrate |
| T | stacking direction height of heat-resistant region |
| D | particle diameter of adhesive particle |

**Claims**

1. A laminate (100) for an electrochemical device, comprising: a substrate (20); and a functional layer (10) arranged on the substrate (20), wherein

   the functional layer (10) contains heat-resistant fine particles (12a); adhesive particles (11a) containing an adhesive polymer; and a binder (12b),
   **characterized in that**
   the adhesive polymer contains a polyester polymer having a glass-transition temperature in a range of not lower than 10°C and not higher than 95°C,
   the functional layer (10) includes an adhesion region (11) formed of the adhesive particles (11a) and a heat-resistant region (12) formed of the heat-resistant fine particles (12a) and the binder (12b) in plan view from a side corresponding to the functional layer (10), and
   the adhesive particles (11a) have a volume-average particle diameter D that is larger than an average stacking direction height T of the heat-resistant region (12).

2. The laminate (100) for an electrochemical device according to claim 1, wherein the adhesive particles (11a) further contain a fusible additive having a melting point in a range of not lower than 40°C and not higher than 95°C.

3. The laminate (100) for an electrochemical device according to claim 2, wherein the fusible additive is at least one selected from the group consisting of an ester wax; a paraffin wax; and a crystalline polyester resin having no glass-transition temperature in a range of not lower than 10°C and not higher than 95°C.

4. The laminate (100) for an electrochemical device according to any one of claims 1 to 3, wherein the volume-average particle diameter D of the adhesive particles (11a) is not less than 1.0 $\mu$m and not more than 10.0 $\mu$m.

5. The laminate (100) for an electrochemical device according to any one of claims 1 to 4, wherein a ratio of the volume-average particle diameter D of the adhesive particles (11a) relative to the average stacking direction height T of the heat-resistant region (12) is not less than 1.1 and not more than 10.0.

6. The laminate (100) for an electrochemical device according to any one of claims 1 to 5, wherein a volume ratio of content of the heat-resistant fine particles (12a) relative to content of the adhesive particles (11a) in the functional layer (10) is not less than 55/45 and not more than 95/5.

7.  The laminate (100) for an electrochemical device according to any one of claims 1 to 6, wherein the adhesive particles (11a) have an average circularity of not less than 0.90 and not more than 0.99.

8.  The laminate (100) for an electrochemical device according to any one of claims 1 to 7, wherein the heat-resistant fine particles (12a) are inorganic fine particles.

9.  The laminate (100) for an electrochemical device according to claim 8, wherein the inorganic fine particles contain at least one selected from the group consisting of alumina particles, boehmite particles, barium sulfate particles, and magnesium hydroxide particles.

10. An electrochemical device comprising the laminate (100) for an electrochemical device according to any one of claims 1 to 9.

**Patentansprüche**

1.  Laminat (100) für eine elektrochemische Vorrichtung, umfassend: ein Substrat (20); und eine auf dem Substrat (20) angeordnete Funktionsschicht (10), wobei

    die Funktionsschicht (10) hitzebeständige Feinpartikel (12a);
    Klebstoffpartikel (11a) enthaltend ein Klebstoffpolymer; und ein Bindemittel (12b) enthält,
    **dadurch gekennzeichnet, dass**
    das Klebstoffpolymer ein Polyesterpolymer mit einer Glasübergangstemperatur in einem Bereich von nicht weniger als 10 °C und nicht mehr als 95 °C enthält,
    die Funktionsschicht (10) in der Draufsicht von einer der Funktionsschicht (10) entsprechenden Seite einen Haftbereich (11), der aus den Klebstoffpartikeln (11a) gebildet ist, und einen hitzebeständigen Bereich (12), der aus den hitzebeständigen Feinpartikeln (12a) und dem Bindemittel (12b) gebildet ist, beinhaltet, und
    die Klebstoffpartikel (11a) einen volumenmittleren Partikeldurchmesser D aufweisen, der größer ist als eine durchschnittliche Stapelrichtungshöhe T des hitzebeständigen Bereichs (12).

2.  Laminat (100) für eine elektrochemische Vorrichtung gemäß Anspruch 1, wobei die Klebstoffpartikel (11a) ferner ein schmelzbares Additiv mit einem Schmelzpunkt in einem Bereich von nicht weniger als 40 °C und nicht mehr als 95 °C enthalten.

3.  Laminat (100) für eine elektrochemische Vorrichtung gemäß Anspruch 2, wobei das schmelzbare Additiv mindestens eines ausgewählt aus der Gruppe bestehend aus einem Esterwachs; einem Paraffinwachs; und einem kristallinen Polyesterharz ohne Glasübergangstemperatur in einem Bereich von nicht weniger als 10 °C und nicht mehr als 95 °C ist.

4.  Laminat (100) für eine elektrochemische Vorrichtung gemäß einem der Ansprüche 1 bis 3, wobei der volumenmittlere Partikeldurchmesser D der Klebstoffpartikel (11a) nicht weniger als 1,0 $\mu$m und nicht mehr als 10,0 $\mu$m beträgt.

5.  Laminat (100) für eine elektrochemische Vorrichtung gemäß einem der Ansprüche 1 bis 4, wobei das Verhältnis des volumenmittleren Partikeldurchmessers D der Klebstoffpartikel (11a) zur mittleren Stapelrichtungshöhe T des hitzebeständigen Bereichs (12) nicht weniger als 1,1 und nicht mehr als 10,0 ist.

6.  Laminat (100) für eine elektrochemische Vorrichtung gemäß einem der Ansprüche 1 bis 5, wobei das Volumenverhältnis des Gehalts an hitzebeständigen Feinpartikeln (12a) zum Gehalt an Klebstoffpartikeln (11a) in der Funktionsschicht (10) nicht weniger als 55/45 und nicht mehr als 95/5 ist.

7.  Laminat (100) für eine elektrochemische Vorrichtung gemäß einem der Ansprüche 1 bis 6, wobei die Klebstoffpartikel (11a) eine durchschnittliche Rundheit von nicht weniger als 0,90 und nicht mehr als 0,99 aufweisen.

8.  Laminat (100) für eine elektrochemische Vorrichtung gemäß einem der Ansprüche 1 bis 7, wobei die hitzebeständigen Feinpartikel (12a) anorganische Feinpartikel sind.

9. Laminat (100) für eine elektrochemische Vorrichtung gemäß Anspruch 8, wobei die anorganischen Feinpartikel mindestens eines ausgewählt aus der Gruppe bestehend aus Aluminiumoxidpartikeln, Böhmitpartikeln, Bariumsulfatpartikeln und Magnesiumhydroxidpartikeln enthalten.

10. Elektrochemische Vorrichtung umfassend das Laminat (100) für eine elektrochemische Vorrichtung gemäß einem der Ansprüche 1 bis 9.

**Revendications**

1. Stratifié (100) destiné à un dispositif électrochimique, comprenant : un substrat (20) ; et une couche fonctionnelle (10) prévue sur le substrat (20), dans lequel

   la couche fonctionnelle (10) contient des particules fines résistantes à la chaleur (12a) ; des particules adhésives (1 1a) contenant un polymère adhésif ; et un liant (12b),
   **caractérisé en ce que**
   le polymère adhésif contient un polymère polyester ayant une température de transition vitreuse non inférieure à 10°c et non supérieure à 95°C,
   la couche fonctionnelle (10) comporte une zone d'adhérence (11) formée des particules adhésives (11a) et une zone résistante à la chaleur (12) formée des particules fines résistantes à la chaleur (12a) et du liant (12b) sur une vue de dessus depuis un côté qui correspond à la couche fonctionnelle (10), et
   les particules adhésives (11a) présentent un diamètre de particules moyen en volume D qui est supérieur à une hauteur T moyenne dans la direction d'empilement de la zone résistante à la chaleur (12).

2. Stratifié (100) destiné à un dispositif électrochimique selon la revendication 1, dans lequel les particules adhésives (11a) contiennent en outre un additif fusible ayant un point de fusion non inférieur à 40°C et non supérieur à 95°C.

3. Stratifié (100) destiné à un dispositif électrochimique selon la revendication 2, dans lequel l'additif fusible est au moins un additif choisi parmi le groupe consistant en une cire d'ester ; une cire de paraffine ; et une résine polyester cristalline sans température de transition vitreuse non inférieure à 10°C et non supérieure à 95°C.

4. Stratifié (100) destiné à un dispositif électrochimique selon l'une quelconque des revendications 1 à 3, dans lequel le diamètre de particules moyen en volume D des particules adhésives (11a) est non inférieur à 1,0 $\mu$m et non supérieur à 10,0 $\mu$m.

5. Stratifié (100) destiné à un dispositif électrochimique selon l'une quelconque des revendications 1 à 4, dans lequel un rapport entre le diamètre de particules moyen en volume D des particules adhésives (11a) et la hauteur T moyenne dans la direction d'empilement de la zone résistante à la chaleur (12) est non inférieur à 1,1 et non supérieur à 10,0.

6. Stratifié (100) destiné à un dispositif électrochimique selon l'une quelconque des revendications 1 à 5, dans lequel un rapport volumique de contenu des particules fines résistantes à la chaleur (12a) par rapport au contenu des particules adhésives (11a) dans la couche fonctionnelle (10) est non inférieur à 55/45 et non supérieur à 95/5.

7. Stratifié (100) destiné à un dispositif électrochimique selon l'une quelconque des revendications 1 à 6, dans lequel les particules adhésives (11a) présentent une circularité moyenne non inférieure à 0,90 et non supérieure à 0,99.

8. Stratifié (100) destiné à un dispositif électrochimique selon l'une quelconque des revendications 1 à 7, dans lequel les particules fines résistantes à la chaleur (12a) sont des particules fines inorganiques.

9. Stratifié (100) destiné à un dispositif électrochimique selon la revendication 8, dans lequel les particules fines inorganiques contiennent au moins une particule fine inorganique choisie parmi le groupe consistant en des particules d'alumine, des particules de bœhmite, des particules de sulfate de baryum, et des particules d'hydroxyde de magnésium.

10. Dispositif électrochimique comprenant le stratifié (100) destiné à un dispositif électrochimique selon l'une quelconque des revendications 1 à 9.

# FIG. 1

# FIG. 2

**REFERENCES CITED IN THE DESCRIPTION**

**Patent documents cited in the description**

- JP 2020177773 A
- JP 2017103030 A
- CN 112054150 A
- JP 2013145763 A